# EUROPÄISCHE PATENTANMELDUNG

(11) **EP 0 935 992 A1**
(43) Veröffentlichungstag der Anmeldung: **18.08.1999**
(21) Anmeldenummer: 99102248.4
(22) Anmeldetag: 05.02.1999
(51) Int. Cl.: B01F 3/04, B67D 1/04

(54) **Vorrichtung zum Anreichern von Flüssigkeiten mit Gasen**

(30) Priorität: 10.02.1998 DE 29802208 U; 11.01.1999 DE 29900241 U
(71) Anmelder: Kautz, Peter, 27243 Gross Ippener (DE)
(72) Erfinder: Pusch, Michael, 26789 Leer (DE)
(74) Vertreter: Eisenführ, Speiser & Partner

(57) **Zusammenfassung**

Die Erfindung betrifft eine Vorrichtung zum Anreichern von Flüssigkeiten, insbesondere Getränken, die in Flüssigkeitsbehältern (4), insbesondere Flaschen, abgefüllt sind, mit Gasen, insbesondere CO₂, mit ersten Anschlußmitteln (12) für eine Gasquelle (6), insbesondere für mindestens eine das Gas enthaltende Gaspatrone, mindestens einem an die ersten Anschlußmittel (12) anschließbaren Gaseinfüllelement (2) zum Einfüllen des Gases in die in einem Flüssigkeitsbehälter (4) befindliche Flüssigkeit und einer Regeleinrichtung (40'), die den sich beim Einfüllen des Gases aufbauenden Druck im Flüssigkeitsbehälter (4) auf einen Sollwert begrenzt. Das Besondere der Erfindung besteht darin, daß die Regeleinrichtung (40') Mittel (60, 64) zur Feststellung des Druckes des Gases und Einstellmittel (54, 72) zur manuellen Einstellung des Sollwertes aufweist.

## Beschreibung

Die Erfindung betrifft eine Vorrichtung zum Anreichern von Flüssigkeiten, insbesondere Getränken, die in Flüssigkeitsbehältern, insbesondere Flaschen, abgefüllt sind, mit Gasen, insbesondere CO₂, mit ersten Anschlußmitteln für eine Gasquelle, insbesondere für eine das Gas enthaltende Gaspatrone, mindestens einem an die ersten Anschlußmittel anschließbaren Gaseinfüllelement zum Einfüllen des Gases in die in einem Flüssigkeitsbehälter befindliche Flüssigkeit und einer Regeleinrichtung, die den sich beim Einfüllen des Gases aufbauenden Druck im Flüssigkeitsbehälter auf einen Sollwert begrenzt.

Derartige Vorrichtungen sind bekannt und befinden sich in vielfältiger Form im Einsatz, und zwar insbesondere als sogenannte Trinkwassersprudler.

In der EP 0 472 995 B1 ist ein Trinkwassersprudler beschrieben, bei welchem die äußere Form der eingesetzten Flasche durch Verwendung einer Bezugsfläche ermittelt und bei Feststellung von Unregelmäßigkeiten in der Form der Flasche der darin aufzubauende Druck automatisch geregelt und dabei begrenzt wird. Wölbt sich der Mantel der Flasche nach außen, so wird der Druck automatisch entsprechend verringert. Ist die Flasche noch zu 'dünn', wird der Druck automatisch noch weiter erhöht, bis der gewünschte Wert erreicht ist. Bei Auftreten dieser Unregelmäßigkeiten nimmt die Flasche gegenüber der Bezugsfläche Stellungen ein, die von der 'Normstellung' abweichen. Am Einfüllkopf sitzt ein Ventil, dessen Kolben an der Steuerfläche eines stationären Nockens anliegt. Da der Einfüllkopf mit der Flasche fest verbunden ist, macht das daran befestigte Ventil und somit dessen Kolben die Bewegung der Flasche gegenüber der Bezugsfläche mit, so daß der Ventilkolben entlang des Nockens unterschiedliche Stellungen einnimmt, wodurch das Ventil entsprechend gesteuert wird.

In der Praxis hat sich jedoch herausgestellt, daß die Verwendung solcher Flaschen mit einem nachgiebigen Mantel nicht zum gewünschten Erfolg führt. Abgesehen davon, daß solche Flaschen aus besonders hochwertigem und somit teurem Kunststoffmaterial hergestellt sein müssen, sind die durch die Nachgiebigkeit des Materials gebildeten Deformationen im Mantel verhältnismäßig gering und im übrigen auch teilweise nicht reproduzierbar, was eine verhältnismäßig ungenaue Regelungsfunktion bei der bekannten Vorrichtung zur Folge hat. Ferner kann die bekannte Vorrichtung nur für Flaschen von einer bestimmten einzigartigen Größe und mit einer bestimmten Nachgiebigkeit deren Mantels verwendet werden, was die bekannte Vorrichtung sehr unflexibel macht.

Es ist daher Aufgabe der Erfindung, den Betrieb der Regelventileinrichtung in der Vorrichtung der eingangs genannten Art zu vereinfachen.

Diese Aufgabe wird bei einer Vorrichtung der eingangs genannten Art dadurch gelöst, daß die Regeleinrichtung Mittel zur Feststellung des Druckes des Gases und Einstellmittel zur manuellen Einstellung des Sollwertes aufweist.

Bei der erfindungsgemäßen Vorrichtung wird der Gasdruck nicht wie beim Stand der Technik nur mittelbar durch Verformen der Flasche, sondern direkt (im Flüssigkeitsbehälter oder in der entsprechenden Zuleitung) ermittelt. Ferner wird bei der erfindungsgemäßen Vorrichtung der Sollwert nicht durch eine 'Normalform' der Flasche im Verhältnis zu einer Bezugsfläche, sondern durch manuelle Einstellung vorgegeben. Beide erfindungsgemäßen Maßnahmen sorgen zum einen für eine hohe Regelgenauigkeit der Regelventileinrichtung und zum anderen für eine Vereinfachung der Handhabung. Außerdem läßt sich bei der erfindungsgemäßen Vorrichtung der Sollwert manuell einstellen, was gerade für unterschiedliche Anwendungen von Vorteil ist. Schließlich lassen sich bei der erfindungsgemäßen Vorrichtung Flaschen verschiedener Größe und unterschiedlichen Verformungsverhaltens verwenden; insbesondere sich auch einfache Glasflaschen einsetzbar.

Vorzugsweise ist die Regeleinrichtung eine Regelventileinrichtung und weist einen Einlaß für das Gas und einen Überdruckauslaß auf, der sich öffnet und das Gas entweichen läßt, wenn der Druck im Flüssigkeitsbehälter den Sollwert erreicht.

Eine gegenwärtig besonders bevorzugte Weiterbildung dieser Ausführung zeichnet sich dadurch aus, daß die Regelventileinrichtung einen vom Einlaß zum Überdruckauslaß führenden ersten Kanal und ein Verschlußteil aufweist, das zwischen einer Schließstellung, in der es den ersten Kanal verschließt, und einer Öffnungsstellung, in der es den ersten Kanal öffnet, bewegbar gelagert und in die Schließstellung federnd vorgespannt ist, wobei die Vorspannung dem Sollwert entspricht. Diese Weiterbildung bietet eine besonders einfach aufgebaute und gleichwohl zuverlässig arbeitende Konstruktion einer Regelventileinrichtung. Eine solche Regelventileinrichtung sollte zweckmäßigerweise eine Feder aufweisen, die sich mit ihrem einen Ende am Verschlußteil abstützt und mit ihrem anderen Ende in mechanischer Verbindung mit den Einstellmitteln befindet.

Die Einstellmittel können bevorzugt ein Einstellelement aufweisen, das in seiner Lage veränderbar ist, so daß die effektive Länge der Feder zwischen ihren Enden einstellbar ist.

Das Einstellelement kann als beweglich gelagerter Schieber oder als drehbar gelagerter Rotationskörper ausgebildet sein, dessen Umfang sich in mechanischer Verbindung mit dem anderen Ende der Feder befindet, wobei sich das Einstellelement mit seinem Umfang in Gleiteingriff mit dem anderen Ende der Feder oder einem dazwischen angeordneten Verbindungsstück befinden sollte.

Für eine effektive Längenveränderung der Feder sollte das Einstellelement exzentrisch gelagert und kreisförmig ausgebildet sein.

Eine gegenwärtig besonders bevorzugte Weiterbildung zeichnet sich dadurch aus, daß die Regelventileinrichtung einen ersten Körper, in dem der erste Kanal und ein zylindrischer Hohlraum, in den der erste Kanal mündet, ausgebildet sind, und einen zweiten Körper aufweist, der einen zylindrischen Abschnitt, mit dem er abgedichtet im zylindrischen Hohlraum des ersten Körpers bewegbar gelagert ist, eine im zylindrischen Abschnitt ausgebildete und das Verschlußteil aufnehmende Bohrung und einen zum Überdruckauslaß führenden zweiten Kanal aufweist und sich in Eingriff mit dem Einstellelement befindet, wobei zweckmäßigerweise in der Bohrung des zylindrischen Abschnittes des zweiten Körpers ein Absatz ausgebildet ist, an dem sich die Feder mit ihrem anderen Ende abstützt. Falls das Einstellelement als drehbar gelagerter Rotationskörper ausgebildet ist, befindet sich zweckmäßigerweise der zweite Körper in Gleiteingriff mit dem Umfang des Einstellelementes.

Bei einer weiteren gegenwärtig besonders bevorzugten Ausführung der Erfindung sind zweite Anschlußmittel vorgesehen, die den Einlaß der Regelventileinrichtung mit dem Flüssigkeitsbehälter verbinden. Diese Ausführung hat den Vorteil, daß die Regelventileinrichtung den Gasdruck im Flüssigkeitsbehälter direkt ermittelt und bei Überschreitung des Sollwertes zur Senkung des Gasdruckes (überflüssiges) Gas aus dem Flüssigkeitsbehälter direkt abläßt.

Alternativ ist aber auch eine Ausführung möglich, bei welcher die Regelventileinrichtung zusätzlich einen Auslaß aufweist und mit ihrem Einlaß und ihrem Auslaß in die ersten Anschlußmittel geschaltet ist. Bei dieser Ausführung wirkt die Regelventileinrichtung in der Gaszuleitung zwischen der Gasquelle und dem Gaseinfüllelement. Bei einer Weiterbildung dieser Ausführung weist die Regelventileinrichtung einen dritten Kanal auf, durch den das Gas von der Gasquelle zum Gaseinfüllelement geleitet wird und von dem der erste Kanal abzweigt, wobei zweckmäßigerweise der dritte Kanal ebenfalls im ersten Körper ausgebildet ist.

Die zuvor beschriebene Regeleinrichtung kann beispielsweise so verwendet werden, daß sie den Gasdruck im Flüssigkeitsbehälter durch Ablassen von überschüssigem Gas auf den eingestellten Wert begrenzt.

Bevorzugt wird aber auch eine Ausführung, bei welcher die Regeleinrichtung das Schließen der ersten Anschlußmittel bewirkt und somit eine weitere Gaszufuhr unmittelbar unterbindet, wenn der Druck im Flüssigkeitbehälter den Sollwert erreicht.

Beide Arbeitsweisen können aber auch miteinander kombiniert werden, indem eine Schließeinrichtung vorgesehen ist, die vom Überdruckauslaß der Regelventileinrichtung angetrieben und die ersten Anschlußmittel verschließt. Bei dieser gegenwärtig besonders bevorzugten Ausführung wird in geschickter Weise das überschüssige Gas als Antriebsmedium für eine Schließeinrichtung verwendet, wodurch im übrigen der Bedienungskomfort der Vorrichtung erhöht wird. Üblicherweise ist in die ersten Anschlußmittel eine Anschlußventileinrichtung geschaltet, die ein Betätigungselement aufweist, welches zwischen einer Schließstellung, in der die Anschlußventileinrichtung geschlossen ist, und einer Öffnungsstellung, in der die Anschlußventileinrichtung geöffnet ist, bewegbar ist, wobei das Betätigungselement mit der Schließeinrichtung koppelbar ist. Das Betätigungselement dieser Anschlußventileinrichtung sollte vorzugsweise in seine Schließstellung federnd vorgespannt sein, so daß lediglich zum Öffnen das Betätigungselement entsprechend beaufschlagt werden muß, während es zum Schließen einfach nur freigegeben bzw. losgelassen werden muß.

Eine gegenwärtig besonders bevorzugte Weiterbildung dieser Ausführung zeichnet sich dadurch aus, daß die Schließeinrichtung eine Kolben/Zylinder-Anordnung aufweist, deren Zylinder an den Überdruckauslaß angeschlossen und deren zwischen einer Ruhestellung und einer Arbeitsstellung beweglicher Kolben mit dem Betätigungselement der Anschlußventileinrichtung derart koppelbar ist, daß bei Beaufschlagung des Kolbens mit Gas aus dem Überdruckauslaß das Betätigungselement in seine Schließstellung bewegt wird. Dadurch, daß bei dieser Weiterbildung die Schließeinrichtung pneumatisch ausgeführt ist, läßt sich eine besonders einfache Realisierung der Schließeinrichtung erzielen. Der Kolben sollte vorzugsweise in seine Ruhestellung, in der das effektive Volumen des Zylinders am kleinsten ist, federnd vorgespannt sein, so daß die Bewegung in die Ruhestellung keinen zusätzlichen Antrieb benötigt, sondern bei Druckabfall im Zylinder aufgrund der Wirkung einer Feder erzielt wird.

Es sollte zweckmäßigerweise eine erste Kopplungseinrichtung vorgesehen sein, durch die der Kolben der Schließeinrichtung mit dem Betätigungselement der Anschlußventileinrichtung koppelbar ist. Diese erste Kopplungseinrichtung sollte mit einem Betätigungsknopf versehen sein, den der Benutzer der Vorrichtung bedient, um Gas in den Füllkopf zu blasen. Hierzu kann die erste Kopplungseinrichtung einen ersten Schwenkhebel aufweisen, der in Anlage an das Betätigungselement der Anschlußventileinrichtung bringbar ist.

Die erste Kopplungseinrichtung kann mit dem Kolben der Schließeinrichtung in lösbaren Eingriff gebracht und dadurch das Betätigungselement der Anschlußventileinrichtung in seine Öffnungsstellung bewegt werden, wenn sich der Kolben in seiner Ruhestellung befindet. Dadurch wird eine wirksame mechanische Verbindung zwischen dem Kolben und der ersten Kopplungseinrichtung hergestellt. Dies hat zur Folge, daß die erste Kopplungseinrichtung - und insbesondere ein vorzugsweise an dieser angeordneter manuell bedienbarer Betätigungsknopf sichtbar - in einer ersten Stellung verbleibt, solange das Gas in das Gaseinfüllelement und somit in den daran angeschlossenen Flüssigkeitsbehälter geleitet wird. Öffnet nach Erreichen des Solldruckes die Regelventileinrichtung ihren Überdruckauslaß, strömt Gas in den Zylinder der Schließeinrichtung, wodurch sich der Kolben von seiner Ruhestellung in seine Arbeitsstellung bewegt und die erste Kopplungseinrichtung mitnimmt bzw. entsprechend betätigt. Dies hat wiederum zur Folge, daß das Betätigungselement der Anschlußventileinrichtung von seiner Öffnungsstellung in seine Schließstellung zurückbewegt wird, wodurch die Anschlußventileinrichtung und somit die ersten Anschlußmittel verschlossen werden, und somit kein weiteres Gas in das Gaseinfüllelement und den daran angeschlossenen Flüssigkeitsbehälter mehr strömt.

Alternativ kann auch ein Arretierungselement vorgesehen sein, das eine Arretierung des Betätigungselementes der Anschlußventileinrichtung in seiner Öffnungsstellung bewirkt, und ist der Kolben der Schließeinrichtung mit dem Arretierungselement derart in Eingriff bringbar, daß die Arretierung des Betätigungselementes durch Bewegung des Kolbens in seine Arbeitsstellung wieder gelöst wird. Sei dieser Weiterbildung wird demnach das Betätigungselement der Anschlußventileinrichtung in seiner Öffnungsstellung nicht durch mechanische Kopplung mit dem Kolben, sondern durch Eingriff eines externen Arretierungselementes gehalten und betätigt der Kolben auf seinem Weg von der Ruhestellung in die Arbeitsstellung das Arretierungselement derart, daß es das Betätigungselement der Anschlußventileinrichtung wieder freigibt und somit die Arretierung gelöst wird.

Das Arretierungselement sollte mit der ersten Kopplungseinrichtung in lösbaren Eingriff gebracht werden, wenn sich die erste Kopplungseinrichtung in einem Betriebszustand befindet, in dem das Betätigungselement der Anschlußventileinrichtung seine Öffnungsstellung einnimmt, und der Kolben der Schließeinrichtung mit dem Arretierungselement derart in Eingriff gebracht werden, daß bei Bewegung des Kolbens in seine Arbeitsstellung der Eingriff des Arretierungselementes mit der ersten Kopplungseinrichtung gelöst wird. Hierzu ist vorzugsweise das Arretierungselement zwischen einer nicht arretierenden Ruhestellung und einer Arretierungsstellung bewegbar und die erste Kopplungseinrichtung in einen die Anschlußventileinrichtung schließenden ersten und in einen die Anschlußventileinrichtung öffnenden zweiten Betriebszustand bringbar, wobei die erste Kopplungseinrichtung ein Rastmittel aufweist, in das das Arretierungselement in seiner Arretierungsstellung eingreift, wenn sich die erste Kopplungseinrichtung in ihrem zweiten Betriebszustand befindet. Hierdurch wird auf besonders einfache konstruktive Weise die Arretierung realisiert, wobei außerdem das Arretierungselement in seine Arretierungsstellung federnd vorgespannt sein kann.

Die Betätigung des Arretierungselementes durch den sich in seine Arbeitsstellung bewegenden Kolben zur Freigabe der Arretierung läßt sich beispielsweise dadurch realisieren, daß am Arretierungselement eine geneigt zu seiner Bewegungsrichtung verlaufende Nockenfläche derart ausgebildet ist, daß der Kolben bei seiner Bewegung in die Arbeitsstellung mit einem Abschnitt in Anlage an die Nockenfläche gelangt und dadurch das Arretierungselement in seine Ruhestellung bewegt.

Üblicherweise ist aus Sicherheitsgründen an das Gaseinfüllelement ein Entlüftungsventil angeschlossen, das ein vom Benutzer der Vorrichtung manuell zu bedienendes Betätigungselement aufweist, welches zwischen einer Schließstellung, in der das Entlüftungsventil geschlossen ist, und einer Öffnungsstellung, in der das Entlüftungsventil geöffnet ist, bewegbar ist. Für diesen Fall ist eine zweite Kopplungseinrichtung vorgesehen, die mit dem ßetätigungselement des Entlüftungsventils einerseits und der Schließeinrichtung andererseits derart koppelbar ist, daß bei Bewegung des Betätigungselementes des Entlüftungsventils in seine Öffnungsstellung die Schließeinrichtung die ersten Anschlußmittel verschließt. Auf diese Weise wird wirksam gewährleistet, daß die Gasquelle nicht noch weiteres Gas nachliefert, wenn das Entlüftungsventil bereits geöffnet ist, und somit kein weiteres Gas verschwendet wird.

Vorzugsweise sollte die zweite Kopplungseinrichtung in einen ersten und einen zweiten Betriebszustand, insbesondere in eine erste und eine zweite Arbeitsstellung, gebracht werden, im ersten Betriebszustand der zweiten Kopplungseinrichtung das Betätigungselement des Entlüftungsventils in seiner Schließstellung verbleiben und im zweiten Betriebszustand der zweiten Kopplungseinrichtung das Betätigungselement des Entlüftungsventils in seine Öffnungsstellung gebracht werden. In diesem Fall sollte die zweite Kopplungseinrichtung mit der ersten Kopplungseinrichtung derart gekoppelt sein, daß die erste Kopplungseinrichtung im ersten Betriebszustand der zweiten Kopplungseinrichtung in Eingriff mit dem Kolben der Schließeinrichtung bringbar ist und sich im zweiten Betriebszustand der zweiten Kopplungseinrichtung außer Eingriff vom Kolben befindet. Dadurch wird gewährleistet, daß die Anschlußventileinrichtung und somit die Gasquelle geschlossen wird, wenn das Betätigungselement des Entlüftungsventils in seine Öffnungsstellung gebracht und somit das Entlüftungsventil geöffnet wird. Zweckmäßigerweise ist die zweite Kopplungseinrichtung als zweiter Schwenkhebel ausgebildet.

Eine weitere gegenwärtig besonders bevorzugte Weiterbildung zeichnet sich dadurch aus, daß die zweite Kopplungseinrichtung in einen ersten und einen zweiten Betriebszustand, vorzugsweise in eine erste und eine zweite Arbeitsstellung, bringbar und mit dem Arretierungselement derart gekoppelt ist, das im ersten Betriebszustand der zweiten Kopplungseinrichtung das Betätigungselement des Entlüftungsventils in seiner Schließstellung verbleibt und bei Bewegung des Betätigungselementes des Entlüftungsventils in seine Öffnungsstellung die zweite Kopplungseinrichtung in den zweiten Betriebszustand gebracht wird und dabei eine Arretierung des Betätigungselementes der Anschlußventileinrichtung durch das Arretierungselement verhindert.

Zweckmäßigerweise ist das Arretierungselement Teil der zweiten Kopplungseinrichtung, wozu das Arretierungselement insbesondere einstückig mit der zweiten Kopplungseinrichtung ausgebildet ist, wobei die erste Arbeitsstellung der zweiten Kopplungseinrichtung mit der Arretierungsstellung des Arretierungselementes und die zweite Arbeitsstellung der zweiten Kopplungseinrichtung mit der Ruhestellung des Arretierungselementes übereinstimmt bzw. zusammenfällt. Somit werden bei dieser Weiterbildung die Bewegungsabläufe und Funktionen von Arretierungselement und zweiter Kopplungseinrichtung auf geschickte Weise miteinander kombiniert, was nicht nur zu einer einfachen, sondern auch platzsparenden Konstruktion führt.

Üblicherweise sitzt aus Sicherheitsgründen das Gaseinfüllelement und somit auch der daran anzuschließende Flüssigkeitsbehälter in einem Gehäuse, das mit einer Tür verschließbar ist. Hierzu ist zweckmäßigerweise das Betätigungselement des Entlüftungsventils mit der Tür gekoppelt und öffnet diese bei Betätigung, wodurch nur ein gemeinsamer Handgriff zum Entlüften und zum Öffnen notwendig ist und sich dadurch ein hoher Bedienkomfort ergibt.

Um beim Entlüften auch den Zylinder der Schließeinrichtung drucklos zu machen und für einen neuen Gaseinfüllvorgang in seine Ruhestellung zu bringen, sollte der Zylinder über eine Verbindungsleitung an den Eingang des Entlüftungsventils anschließbar sein. Vorteilhaft ist eine ständige Verbindung, die allerdings ein Rückschlagventil bedingt, das bei einem Druckgefälle von der Verbindungsleitung in den Zylinder schließt; hierdurch bleibt gewährleistet, daß der Kolben nur durch das aus dem Überdruckauslaß der Regelventileinrichtung austretende Gas angetrieben wird.

Nachfolgend werden bevorzugte Ausführungsbeispiele der Erfindung anhand der beiliegenden Zeichnungen näher erläutert. Es zeigen:
- Figur 1: eine schematische Darstellung einer ersten Ausführung einer Vorrichtung zum Anreichern von Flüssigkeiten mit Kohlensäure;
- Figur 2: in vergrößerter und teilweise geschnittener Darstellung ein in der ersten Ausführung gemäß Figur 1 verwendetes Regelventil;
- Figur 3: eine zweite Ausführung einer Vorrichtung zum Anreichern von Flüssigkeiten mit Kohlensäure in einer ersten schematischen Darstellung;
- Figur 4: in vergrößerter und teilweise geschnittener Darstellung ein in der zweiten Ausführung gemäß Figur 3 verwendetes Regelventil;
- Figur 5: eine weitere schematische Darstellung der zweiten Ausführung in einem ersten Betriebszustand;
- Figur 6: die gleiche Ansicht wie Figur 5, wobei sich die dargestellte Vorrichtung in einem zweiten Betriebszustand befindet;
- Figur 7: die gleiche Ansicht wie Figur 5, wobei sich die dargestellte Vorrichtung in einem dritten Betriebszustand befindet;
- Figur 8: eine schematische Darstellung einer gegenüber der zweiten Ausführung modifizierten Ausführung in einem ersten Betriebszustand;
- Figur 9: die gleiche Ansicht wie Figur 8, wobei sich die dargestellte Vorrichtung in einem zweiten Betriebszustand befindet;
- Figur 10: die gleiche Ansicht wie Figur 8, wobei sich die dargestellte Vorrichtung in einem dritten Betriebszustand befindet;
- Figur 11: die gleiche Ansicht wie Figur 8, wobei sich die dargestellte Vorrichtung in einem vierten Betriebszustand befindet; und
- Figur 12: die gleiche Ansicht wie Figur 8, wobei sich die dargestellte Vorrichtung in einem fünften Betriebszustand befindet.

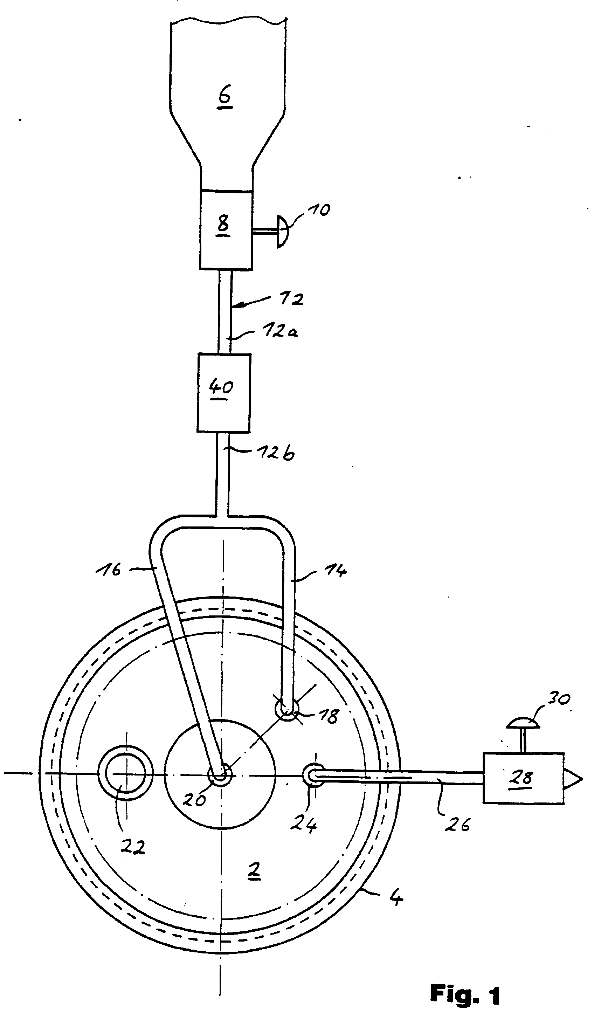

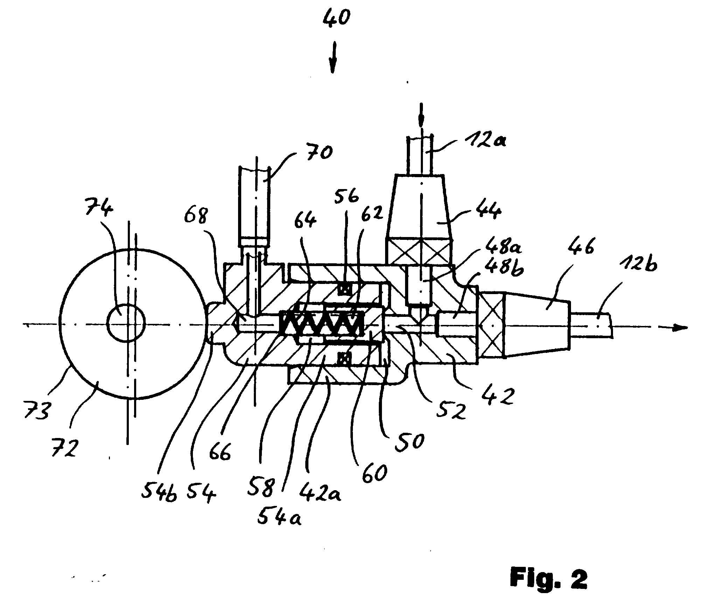

In den Figuren 1 und 2 ist eine erste bevorzugte Ausführung einer Vorrichtung zum Anreichern von Flüssigkeiten mit Gasen schematisch dargestellt. Im Regelfall handelt es sich bei diesen Flüssigkeiten um Getränke, die in Flüssigkeitsbehältern, insbesondere Flaschen abgefüllt sind, wobei als Gas im allgemeinen CO₂ bzw. Kohlensäure verwendet wird. Deshalb ist eine solche Vorrichtung im Regelfall Teil eines Trinkwassersprudlers.

In Figur 1 ist schematisch in Draufsicht ein Füllkopf 2 eines solchen Trinkwassersprudlers dargestellt. An der Unterseite des Füllkopfes 2 ist eine Flasche mit ihrem Kopf einhängbar. In Figur 1 ist eine am Füllkopf 2 befestigte Flasche 4 schematisch erkennbar. Aus Gründen der Übersichtlichkeit ist das Gehäuse zur Aufnahme der Flasche 4 weggelassen.

In Figur 1 ist ebenfalls schematisch der Kopf einer Gaspatrone 6 dargestellt, aus der die Kohlensäure bereitgestellt wird. Am Kopf der Gaspatrone 6 ist ein Handventil 8 mit einem Betätigungsknopf 10 vorgesehen. Wird der Betätigungsknopf 10 gedrückt, entweicht Gas aus der Gaspatrone 6 in eine daran angeschlossene erste Gasleitung 12, die in zwei Teilgasleitungen 12a und 12b unterteilt ist. Die erste Gasleitung 12 gabelt sich in eine zweite Gasleitung 14 und eine dritte Gasleitung 16 auf. Die zweite Gasleitung 14 führt zu einem ersten Anschluß 18 im Füllkopf 2. Dieser erste Anschluß 18 mündet in einen im Füllkopf 2 ausgebildeten (in den Figuren nicht erkennbaren) Hohlraum, in dem ein Verschlußkolben beweglich und abgedichtet gelagert ist, mit dem der Kopf der Flasche 4 während des Betriebes gegenüber der Umgebung verschlossen wird. Um diesen Verschlußkolben gegen die Flasche zu pressen, wird durch die zweite Gasleitung 14 und den ersten Anschluß 18 Gas unter Druck in den Hohlraum geblasen. Die dritte Gasleitung 16 führt zu einem zweiten Anschluß 20 im Füllkopf 2. Dieser zweite Anschluß 20 steht in Verbindung mit einer im Füllkopf 2 angeordneten (in den Figuren nicht erkennbaren) Injektionslanze, die durch den Druckkolben abgedichtet geführt und in die Flüssigkeit in der am Füllkopf 2 montierten Flasche 4 eingetaucht ist.

Wie Figur 1 ferner erkennen läßt, ist am Füllkopf 2 ein Sicherheitsventil 22 vorgesehen, durch das in Abhängigkeit einer werkseitigen Einstellung bei Überdruck automatisch Gas aus dem Füllkopf 2 abgelassen wird.

Schließlich ist am Füllkopf 2 ein dritter Anschluß 24 vorgesehen, an dem eine Leitung 26 angeschlossen ist, die zu einem Entlüftungsventil 28 führt, das mit Hilfe eines Betätigungsknopfes 30 manuell bedienbar ist. Dieses Entlüftungsventil 28 wird nach Beendigung des Einblasens der Kohlensäure in die Flüssigkeit in der Flasche 4 betätigt, um einen Druckausgleich zu schaffen, bevor die Flasche 4 vom Füllkopf 2 wieder abgenommen werden kann.

Gewöhnlich weist die Vorrichtung aus Sicherheitsgründen ein Gehäuse auf, das die zu befüllende Flasche aufnimmt und mit einer Tür verschlossen ist; in den Figuren ist das Gehäuse nicht dargestellt. Somit enthält das Gehäuse auch zumindest die Injektionslanze und einen Teil des Füllkopfes 2, der gewöhnlich den Oberteil des Gehäuses bildet. Um den Komfort zu erhöhen kann der Betätigungsknopf 30 für das Entlüftungsventil 28 mit der Tür derart gekoppelt sein, daß die Tür bei oder nach Drücken des Betätigungsknopfes 30 und somit während des Entlüftens automatisch geöffnet wird.

Wie Figur 1 ferner erkennen läßt, ist in der ersten Gasleitung 12 ein Regelventil 40 angeordnet, das die erste Gasleitung 12 in eine erste Teilgasleitung 12a und eine zweite Teilgasleitung 12b unterteilt.

In Figur 2 ist die Konstruktion dieses Regelventils 40 im einzelnen dargestellt.

Das Regelventil 40 weist einen stationären ersten Ventilkörper 42 auf, der mit einem ersten Anschluß 44 für die erste Teilgasleitung 12a, durch die das Gas von der Gaspatrone 6 in das Regelventil 40 strömt, und mit einem zweiten Anschluß 46 für die zweite Teilgasleitung 12b vorgesehen ist, mit welcher das Gas vom Regel ventil 40 zum Einfüllkopf 2 geführt wird. Im Inneren des ersten Ventilkörpers 42 sind zwei im rechten Winkel zueinander verlaufende und miteinander verbundene Bohrungen 48a und 48b ausgebildet, die gemeinsam einen ersten Kanal bilden. Die erste Bohrung 48a steht mit dem ersten Anschluß 44 und die zweite Bohrung 48b mit dem zweiten Anschluß 46 in Verbindung, so daß es sich bei dem von den beiden Bohrungen 48a und 48b gemeinsam gebildeten Kanal um einen Durchgangskanal handelt, der die beiden Anschlüsse 44 und 46 und somit die beiden Teilgasleitungen 12a und 12b miteinander verbindet und durch den das Gas von der ersten Teilgasleitung 12a zur zweiten Teilgasleitung 12b durchgeleitet wird.

Der erste Ventilkörper 42 weist einen zylindrischen Fortsatz 42a auf, der mit einer zylindrischen Aussparung 50 versehen ist. In diese zylindrische Aussparung 50 mündet ein zweiter Kanal 52, der von dem durch die beiden Bohrungen 48a und 48b gebildeten ersten Kanal abzweigt und koaxial zur zylindrischen Aussparung 50 angeordnet ist.

Das Regelventil 40 weist einen beweglichen zweiten Ventilkörper 54 auf, der mit einem zylindrischen Abschnitt 54a versehen ist, welcher in der zylindrischen Aussparung 50 des zylindrischen Fortsatzes 42a des ersten Ventilkörpers 42 bewegbar geführt ist. Demnach entspricht der Außendurchmesser des zylindrischen Abschnittes 54a des zweiten Ventilkörpers 54 dem Innendurchmesser der zylindrischen Aussparung 50 des zylindrischen Fortsatzes 42a des ersten Ventilkörpers 42. Im Umfang des zylindrischen Abschnittes 54a des zweiten Ventilkörpers 54 ist ein Dichtring 56 angeordnet, der sich in Gleiteingriff mit der zylindrischen Innenfläche des zylindrischen Fortsatzes 42a des ersten Ventilkörpers 42 befindet, wodurch ein dichtender Abschluß des zwischen dem zylindrischen Abschnitt 54a des zweiten Ventilkörpers 54 und dem zylindrischen Fortsatz 42a des ersten Ventilkörpers 42 gebildeten Hohlraumes hergestellt wird.

Der zylindrische Abschnitt 54a des zweiten Ventilkörpers 54 ist ebenfalls mit einer zylindrischen Bohrung 58 versehen, die koaxial zu der zylindrischen Aussparung 50, dem zweiten Kanal 52 und dem zylindrischen Abschnitt 54a angeordnet und zum ersten Ventilkörper 42 hin offen ist. In dieser Bohrung 58 sitzt ein zylindrisches Verschlußteil 60, das an seiner vom ersten Ventilkörper 42 abgewandten Seite eine zylindrische und koaxial angeordnete Aussparung 62 aufweist. Eine Spiralfeder 64 stützt sich mit ihrem einen Ende am Verschlußteil 60 in dessen Aussparung 62 und mit ihrem anderen Ende am zweiten Ventilkörper 54 in einer sich am anderen Ende der Bohrung 58 fortsetzenden Vertiefung 66 ab.

Die Spiralfeder 64 ist derart vorgespannt, daß sie das Verschlußteil 60 gegen den ersten Ventilkörper 42 drückt. Dabei ist das Verschlußteil 60 so ausgebildet, daß es an seiner zum ersten Ventilkörper 42 gerichteten Seite in der dargestellten Ausführung aus Voll-Material besteht, also geschlossen ist, so daß in der in Figur 2 gezeigten Stellung das Verschlußteil 60 den zweiten Kanal 52 verschließt.

Am entgegengesetzten Ende der Bohrung 58 schließt sich im Inneren des zweiten Ventilkörpers 54 an der Vertiefung 66 ein dritter Kanal 68 an, der zu einem Auslaß 70 führt, bei dem es sich um einen Überdruckauslaß handelt.

In der in Figur 2 gezeigten Stellung kann sich die Feder 64 in Richtung auf den stationären ersten Ventilkörper 42 nicht weiter entspannen, da das Verschlußteil 60 an diesem anliegt und eine weitere Bewegung nicht mehr möglich ist. Da die Spiralfeder 64, wie zuvor erwähnt, unter Vorspannung steht, wäre sie deshalb mit ihrem anderen Ende bestrebt, sich zu entspannen, was zu einer Bewegung des zweiten Ventilkörpers 54 weg vom ersten Ventilkörper 42 führen würde. Jedoch wird diese Bewegung von einem scheibenförmigen Exzenter 72 begrenzt, der (exzentrisch) an einer feststehenden Achse 74 drehbar gelagert ist und an dessen Umfang 73 der zweite Ventilkörper 54 mit seinem freien Ende 54b anliegt, wie Figur 2 erkennen läßt. Durch Verdrehen der Exzenterscheibe 72 verändert sich die Position des beweglichen zweiten Ventilkörpers 54 gegenüber dem stationären ersten Ventilkörper 42 und somit auch die effektive Länge der Spiralfeder 64, so daß sich auf diese Weise die Vorspannung der Spiralfeder 64 einstellen läßt.

Nachfolgend wird der Betrieb der zuvor erläuterten ersten Ausführung beschrieben.

Nach Befestigung der bereits gefüllten Flasche 4 am Füllkopf 2 wird durch Drücken des Betätigungsknopfes 10 das Handventil 8 geöffnet, wodurch CO₂ aus der Gaspatrone 6 durch das Handventil 8 in die erste Gasleitung 12 und das darin angeordnete Regelventil 40 sowie durch die zweiten und dritten Gasleitungen 14, 16 strömt, so daß das CO₂ aus der Gaspatrone 6 durch die beiden Anschlüsse 18 und 20 in den Füllkopf 2 eintritt. Dabei tritt das Gas aus der ersten Teilgasleitung 12a über den ersten Anschluß 44 in das Regelventil 40 ein, strömt dort von der ersten Bohrung 48a zur zweiten Bohrung 48b und verläßt das Regelventil 40 über den zweiten Anschluß 46 in die zweite Teilgasleitung 12b, wobei sich auch der zweite Kanal 52 im Regelventil 40 mit Gas füllt. Währenddessen baut sich im gesamten System langsam der Druck auf, bis die von der Spiralfeder 64 erzeugte Vorspannung überwunden und das Verschlußteil 60, das ja über den zweiten Kanal 52 vom Gasdruck beaufschlagt wird, vom ersten Ventilkörper 42 weggedrückt wird. Somit öffnet das Verschlußteil 60, wodurch das Gas aus dem zweiten Kanal 52 in die zylindrische Aussparung 50 des zylindrischen Fortsatzes 42a des ersten Ventilkörpers 42 entweichen, um das Verschlußteil 60 herum strömen und über den dritten Kanal 68 aus dem Auslaß 70 wieder austreten kann. Damit das Gas am Verschlußteil 60 vorbeiströmen kann, ist dieses an seiner Oberfläche mit entsprechenden Längsnuten versehen, die in Figur 2 im einzelnen nicht erkennbar sind.

Wenn kein CO₂ aus der Gaspatrone 6 nachströmt, da mittlerweile das Handventil 8 wieder geschlossen worden ist, sinkt auch der Druck im gesamten System, bis die von der Spiralfeder 64 erzeugte Vorspannung überwiegt und dadurch das Verschlußteil 60 wieder verschließt.

Durch Veränderung der effektiven Länge der Spiralfeder 64 und somit deren Vorspannung mit Hilfe der Exzenterscheibe 72 läßt sich der Sollwert des Gasdruckes einstellen, bei welchem das Verschlußteil 60 und somit das Regelventil 40 öffnen soll.

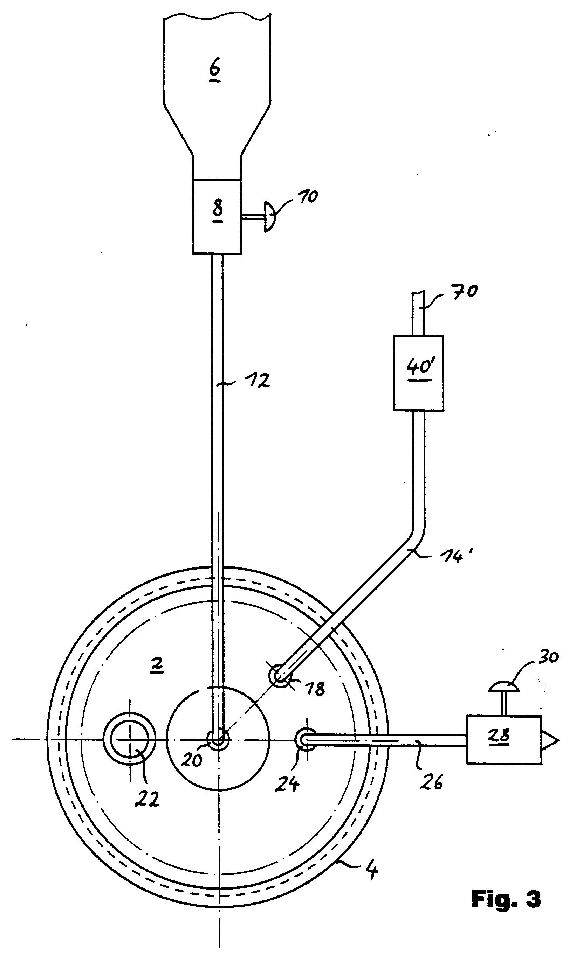

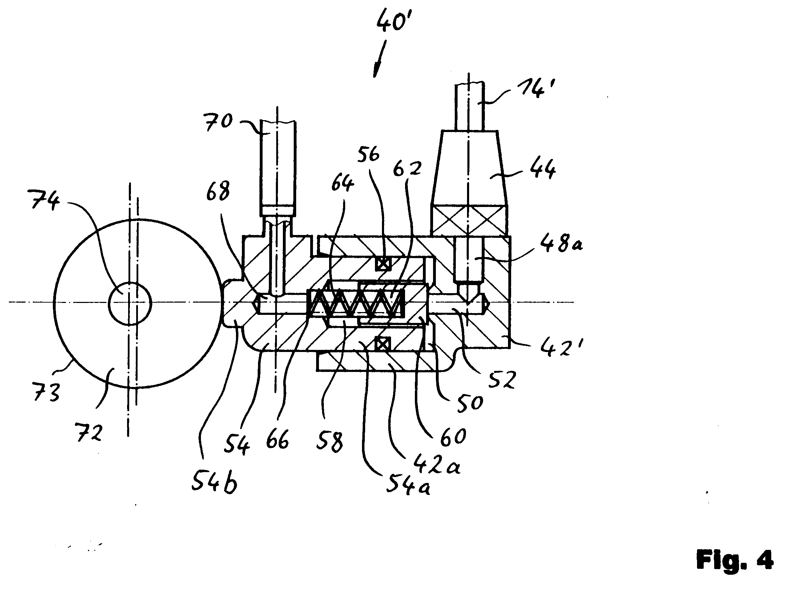

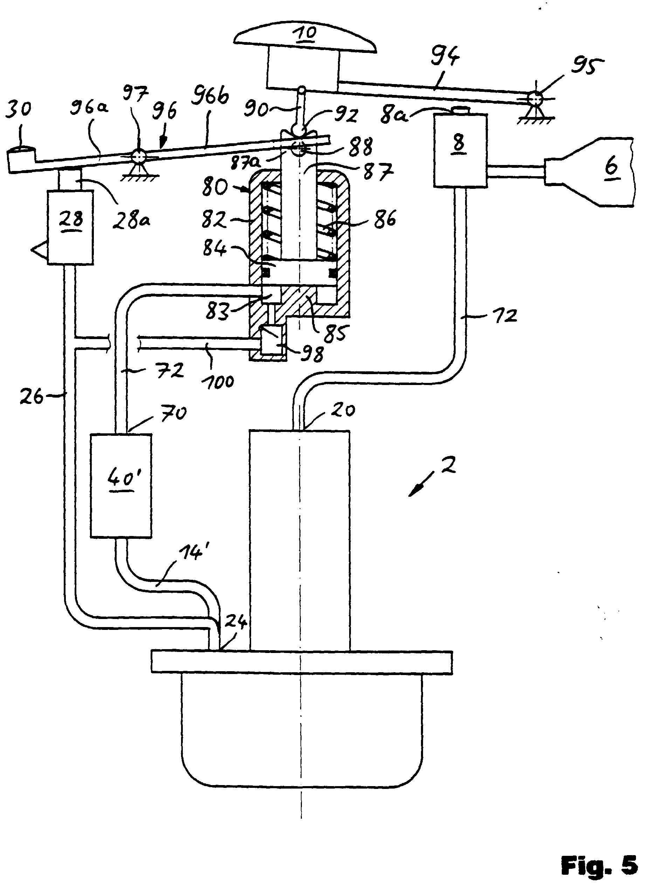

In den Figuren 3 bis 7 ist eine zweite bevorzugte Ausführung einer Vorrichtung zum Anreichern von Flüssigkeiten mit Gasen schematisch dargestellt, wobei die Figuren 3 und 4 mit den Figuren 1 und 2 vergleichbare Ansichten zeigen, während in den Figuren 5 bis 7 außerdem noch Einzelheiten einer hier zusätzlich vorgesehenen Schließautomatik dargestellt sind.

Wie ein Vergleich der Figuren 3 und 4 mit den Figuren 1 und 2 erkennen läßt, unterscheidet sich die zweite Ausführung von der ersten Ausführung in einem geänderten Anschluß des Regelventils 40' am Füllkopf 2 und in einem geänderten Aufbau des Regelventils 40'. Nachfolgend werden diese Unterschiede im einzelnen erläutert, während auf die Übereinstimmungen nicht näher eingegangen werden soll, wobei für gleiche Teile die gleichen Bezugszeichen verwendet werden.

Wie Figur 3 erkennen läßt, ist bei der zweiten Ausführung die Gaspatrone 6 nur über eine einzige Gasleitung an den Füllkopf 2 angeschlossen, nämlich über die erste Gasleitung 12, die zum zweiten Anschluß 20 im Füllkopf 2 führt. Das Regelventil 40' dieser Ausführung sitzt nicht mehr in der Gasleitung 12, sondern ist vollständig getrennt von der ersten Gasleitung 12 über eine zweite Gasleitung 14' an den ersten Anschluß 18 im Füllkopf 2 angeschlossen; dementsprechend besteht auch keine Verbindung zwischen der zweiten Gasleitung 14' und der ersten Gasleitung 12.

Wie bei der ersten Ausführung kommuniziert der erste Anschluß 18 mit einem im Füllkopf 2 vorhandenen (in den Figuren nicht erkennbaren) Hohlraum, in dem ein (in den Figuren nicht dargesteller) Verschlußkolben beweglich und abgedichtet gelagert ist, mit dem der Kopf der Flasche 4 während des Betriebes gegenüber der Umgebung verschlossen wird. Ferner steht auch bei dieser Ausführung der zweite Anschluß 20 in Verbindung mit einer im Füllkopf 2 angeordneten (in den Figuren nicht erkennbaren) Injektionslanze, die durch den Druckkolben abgedichtet geführt und in die Flüssigkeit in der am Füllkopf 2 montierten Flasche 4 eingetaucht ist. Im Gegensatz zur ersten Ausführung kommuniziert aber bei dieser Ausführung der den Verschlußkolben aufnehmende Hohlraum mit der Flasche 4, und zwar über (in den Figuren nicht dargestellte) Verbindungskanäle.

Wie ein Vergleich der Figur 4 mit Figur 2 erkennen läßt, fehlt bei dem Regelventil 40' die zweite Bohrung 48b und der zweite Anschluß 46. Demnach ist das Regelventil 40' mit dem ersten Anschluß 44 lediglich an die zweite Gasleitung 14' angeschlossen (vgl. hierzu auch Figur 3). Somit bilden die (verbliebene) erste Bohrung 48a, der zweite Kanal 52, die zylindrische Bohrung 58 und der dritte Kanal 68 eine Verbindung zwischen dem (verbliebenen) ersten Anschluß 44 und dem Überdruckauslaß 70, wobei diese Verbindung in der anhand der ersten Ausführung beschriebenen Weise vom Verschlußteil 60 verschließbar und die Vorspannung der diesen beaufschlagenden Spiralfeder 64 durch Verdrehen der Exzenterscheibe 72 entsprechend einstellbar ist.

In den Figuren 5 bis 7 ist die zuvor anhand der Figuren 3 und 4 beschriebene Anordnung mit dem Füllkopf 2, der Gaspatrone 6, dem Handventil 8, den ersten und zweiten Gasleitungen 12 und 14', den zweiten und dritten Anschlüssen 20 und 24, der Entlüftungsleitung 26, dem Entlüftungsventil 28 und dem Regelventil 40' ebenfalls dargestellt. Auch die in Figur 3 gezeigten Betätigungsknöpfe 10 und 30 finden sich in den Figuren 5 bis 7 wieder, wobei der Betätigungsknopf 10 dem Handventil 8 und der Betätigungsknopf 30 dem Entlüftungsventil 28 zugeordnet ist.

Ferner ist in den Figuren 5 bis 7 eine Kolben/Zylinder-Anordnung 80 zu erkennen, dessen Zylinder 82 über eine Leitung 72 mit dem Überdruckauslaß 70 des Regelventils 40' kommuniziert. Innerhalb des Zylinders 82 ist ein Kolben 84 beweglich gelagert, der durch eine Feder 86 in die in Figur 5 gezeigte Ruhestellung vorgespannt ist. In dieser Ruhestellung liegt der Kolben 84 auf einem an dem gemäß Figur 5 unteren Ende des Hohlraums 83 des Zylinders 82 mittig ausgebildeten Vorsprung 85 auf, so daß das effektive Volumen des Hohlraums 83, wo die vom Überdruckauslaß 70 des Regelventils 40' kommende Leitung 72 angeschlossen ist, nur noch etwa die Form eines Ringes hat. An der - gemäß Figur 5 oberen - der Feder 86 zugewandten Seite des Kolbens 84 ist eine Kolbenstange 87 befestigt, die abgedichtet durch das gemäß Figur 5 obere Ende des Zylinders 82 nach außen geführt ist und an ihrem freien Ende 87a eine quer zu ihrer Längserstreckung und somit zur Bewegungsrichtung verlaufende und im Querschnitt teilkreisförmige Rastnut 88 aufweist.

An der Unterseite des Betätigungsknopfes 10 des Handventils 8 ist ein gemäß Figur 5 nach unten ragender Steg 90 angeordnet, dessen freies Ende ein Rastmittel 92 aufweist. Das Rastmittel 92 besitzt eine größere Dicke als der übrige Teil des Steges 90 und weist einen teilkreisförmigen Querschnitt auf, der etwa dem Querschnitt der Rastnut 88 entspricht. Der Betätigungsknopf 10 ist so angeordnet, daß der Steg 90 mit seinem Rastmittel 92 zum freien Ende der Kolbenstange 87 ausgerichtet ist, so daß das Rastmittel 92 in Rasteingriff mit der Rastnut 88 bringbar ist.

Wie ferner Figur 5 erkennen läßt, ist der Betätigungsknopf 10 an einem ersten Schwenkhebel 94 befestigt, der sich über das Betätigungselement 8a des Handventils 8 erstreckt. Dabei ist der erste Schwenkhebel 94 an einem Gelenk 92 gelagert und so angeordnet, daß das Betätigungselement 8a des Handventils 8 zwischen dem Betätigungsknopf 10 und dem Gelenk 95 liegt.

Mit Hilfe des Betätigungselementes 8a läßt sich das Handventil 8 öffnen und schließen. Das Betätigungselement 8a ist in eine Stellung federnd vorgespannt, in der das Handventil 8 geschlossen ist; es handelt sich hier um die Schließstellung des Betätigungselementes 8a, in der es in Figur 5 gezeigt ist (, wobei weitere Einzelheiten des Handventils 8 in den Figuren 5 is 7 nicht dargestellt sind). In der Schließstellung ragt das Betätigungselement 8a am weitesten aus dem Handventil 8 heraus. Durch Drücken gegen die federnde Vorspannung wird das Betätigungselement 8a in seine Öffnungsstellung bewegt, wodurch das Handventil 8 geöffnet wird, und ragt nur noch ein wenig aus dem Handventil 8 heraus. Betätigt wird das Betätigungselement 8a des Handventils 8 durch den ersten Schwenkhebel 94, indem dieser durch Verschwenken in Anlage an das Betätigungselement 8a gelangt.

Wie Figur 5 ferner erkennen läßt, ist ein zweiter Schwenkhebel 96 vorgesehen, der im Bereich seines mittleren Abschnittes an einem Gelenk 97 schwenkbar gelagert und somit als Doppelhebel ausgebildet ist. Demnach weist der zweite Schwenkhebel 96 einen ersten Hebelarm 96a und einen entgegengesetzten zweiten Hebelarm 96b auf. Der erste Hebelarm 96a erstreckt sich über das Betätigungselement 28a des Entlüftungsventils 28 und ist mit dem Betätigungsknopf 30 für das Entlüftungsventil 28 versehen. Im dargestellten Ausführungsbeispiel sitzt der Betätigungsknopf 30 am freien Ende des ersten Hebelarmes 96a.

Das Betätigungselement 28a wirkt in gleicher Weise wie das Betätigungselement 8a, ist also in eine Schließstellung federnd vorgespannt, in der das Entlüftungsventil 28a geschlossen ist, und wird gegen die federnde Vorspannung durch Beaufschlagung mit Druck in eine Öffnungsstellung bewegt, in der das Entlüftungsventil 28 geöffnet ist. Das Betätigungselement 28a ist in Figur 5 in seiner Schließstellung gezeigt (- weitere Einzelheiten des Entlüftungsventils 28 sind in den Figuren 5 bis 7 nicht dargestellt). Die Bewegung des Betätigungselementes 28a von der Schließstellung in die Öffnungsstellung erfolgt durch entsprechendes Verschwenken des zweiten Schwenkhebels 96, indem dessen erster Hebelarm 96a in Anlage an das Betätigungselement 28a gebracht wird.

Der entgegengesetzte zweite Hebelarm 96b des zweiten Schwenkhebels 96 untergreift mit seinem Ende das das Rastmittel 92 bildende freie Ende des an der Unterseite des Betätigungsknopfes 10 angebrachten Steges 90. Dabei ist das Ende des zweiten Hebelarmes 96b so ausgebildet, daß der zweite Schwenkhebel 96 sowohl gegenüber der Kolbenstange 87 als auch gegenüber dem Steg 90 frei bewegbar, jedoch in Anlage an das freie Ende bzw. Rastmittel 92 des Steges 90 bringbar ist, wenn der zweite Schwenkhebel 96 mit seinem ersten Hebelarm 96a in Richtung auf das Betätigungselement 28a des Entlüftungsventils 28 veschwenkt wird. Alternativ ist es selbstverständlich beispielsweise auch denkbar, daß der zweite Hebelarm 96b in ähnlicher Anordnung den Betätigungsknopf 10 oder den ersten Schwenkhebel 94 untergreift und daran in Anlage bringbar ist.

Mit dem zweiten Schwenkhebel 96 kann die Tür eines Gehäuses entsprechend gekoppelt sein, um diese bei Betätigung des Betätigungselementes 28a durch den ersten Hebelarm 96a und somit beim Öffnen des Entlüftungsventils 28 gleichzeitig automatisch zu öffnen.

Wie in Figur 5 schließlich gezeigt ist, kommuniziert der Hohlraum 83 des Zylinders 82 der Kolben/Zylinder-Anordnung 80 mit einem Rückschlagventil 98, das wiederum über eine Verbindungsleitung 100 mit der vom Füllkopf 2 zum Entlüftungsventil 28 führenden Leitung 26 kommuniziert. Wie in Figur 5 schematisch zu erkennen ist, ist das Rückschlagventil 98 so angeordnet, daß es bei einem Druckgefälle von der Verbindungsleitung 100 zum Hohlraum 83 des Zylinders 82 schließt und bei einem Druckgefälle vom Hohlraum des Zylinders 82 zur Verbindungsleitung 100 öffnet.

Nachfolgend wird der Betrieb der zweiten Ausführung beschrieben.

Figur 5 zeigt den Ruhezustand der Vorrichtung, bevor CO₂ aus der Gaspatrone 6 in den Füllkopf 2 strömt. Hierbei befinden sich die Betätigungselemente 8a und 28a des Handventils 8 und des Entlüftungsventils 28 jeweils in ihrer federnd vorgespannten Schließstellung; das Handventil 8 und das Entlüftungsventil 28 sind also jeweils geschlossen. Der den Betätigungsknopf 10 tragende erste Schwenkhebel 94 befindet sich in seiner Ruhestellung und liegt wenn überhaupt - lose auf dem Betätigungselement 8a des Handventils 8 auf. Auch der zweite Schwenkhebel 96 befindet sich in seiner Ruhestellung und liegt mit seinem ersten Hebelarm 96a auf dem Betätigungselement 28a - wenn überhaupt - lose auf. Das gesamte System ist im wesentlichen drucklos und dadurch das Rückschlagventil 98 mehr oder weniger geöffnet. Mit seinem zweiten Hebelarm 96b liegt der zweite Schwenkhebel 96 lose am Steg 90 an, dessen Rastmittel 92 von der Kolbenstange 87 gelöst ist. Der Kolben 84 der Kolben/Zylinder-Anordnung 80 befindet sich in seiner federnd vorgespannten Ruhestellung, wodurch das effektive Volumen des Innenraums 83 des Zylinders 82 am kleinsten ist.

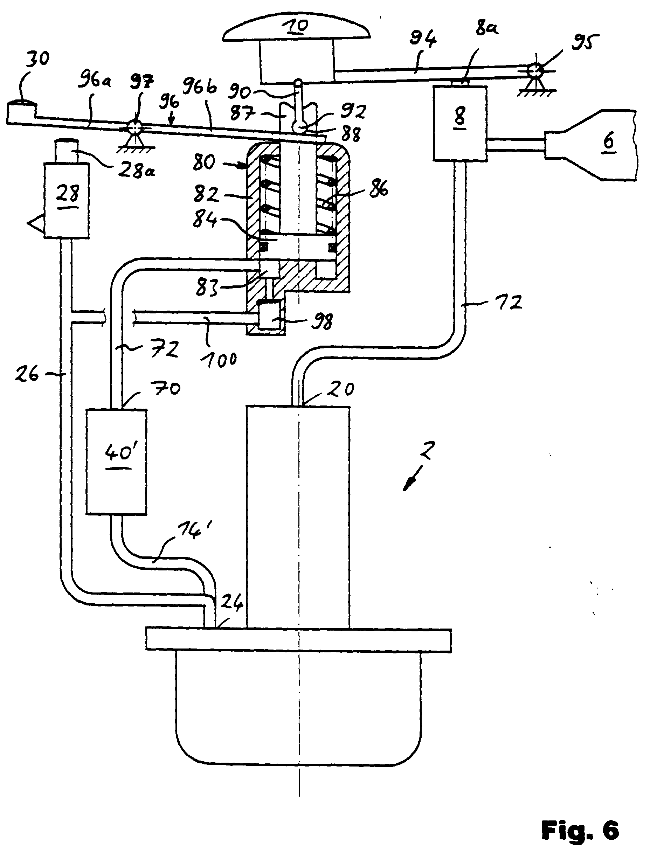

Nach Befestigung der bereits gefüllten Flasche am Füllkopf 2 wird durch Drücken des Betätigungsknopfes 10 der erste Schwenkhebel 94 entsprechend verschwenkt, wodurch dieser in Anlage an das Betätigungselement 8a des Handventiles 8 gelangt und es in seine Öffnungsstellung mitnimmt, das Handventil 8 geöffnet wird und CO₂ aus der Gaspatrone 6 durch das Handventil 8 in die erste Gasleitung 12 strömt. Durch Drücken des Betätigungsknopfes 10 gelangt außerdem der an der Unterseite des Betätigungsknopfes 10 sitzende Steg 90 durch Eintritt seines Rastmittels 92 in die Rastnut 88 in Rasteingriff mit der Kolbenstange 87. Während dieser Bewegung nimmt außerdem das Rastmittel 92 den an diesem anliegenden zweiten Hebelarm 96b des zweiten Schwenkhebels 96 mit, wodurch der zweite Schwenkhebel 96 entsprechend verschwenkt und dessen erster Hebelarm 96a vom Betätigungselement 28a des Entlüftungsventils 28 wegbewegt wird. Dieser Betriebszustand ist in Figur 6 gezeigt.

Durch das geöffnete Handventil 8 strömt nun das CO₂ aus der Gaspatrone 6 über die erste Gasleitung 12 zum zweiten Anschluß 20 am Füllkopf 2, tritt in den Füllkopf 2 ein, strömt durch die Injektionslanze und tritt schließlich aus dieser in die Flüssigkeit in der Flasche aus. Dadurch baut sich nicht nur in der Flasche, sondern auch in dem Füllkopf 2 und dem übrigen System langsam der Druck auf. Da der einen Verschlußkolben aufnehmende Hohlraum (in den Figuren nicht dargestellt) über Verbindungskanäle mit der Flasche verbunden ist, baut sich auch in diesem Hohlraum der Druck auf, wodurch der Verschlußkolben in dichtende Anlage an den (in den Figuren ebenfalls erkennbaren) Kopf der Flasche gedrückt wird. Da das Regelventil 40' über die zweite Gasleitung 14' und den ersten Anschluß 18 an diesen Hohlraum angeschlossen ist, baut sich der Druck ebenfalls in dieser zweiten Gasleitung 14' bis zum Regelventil 40' und somit auch im zweiten Kanal 52 des Regelventils 40' (Figur 4) auf, bis im Regelventil 40' die von der Spiralfeder 64 erzeugte Vorspannung überwunden wird und dadurch das Verschlußteil 60 öffnet. Im übrigen arbeitet das Regelventil 40' der zweiten Ausführung in gleicher Weise wie das Regelventil 40 der ersten Ausführung.

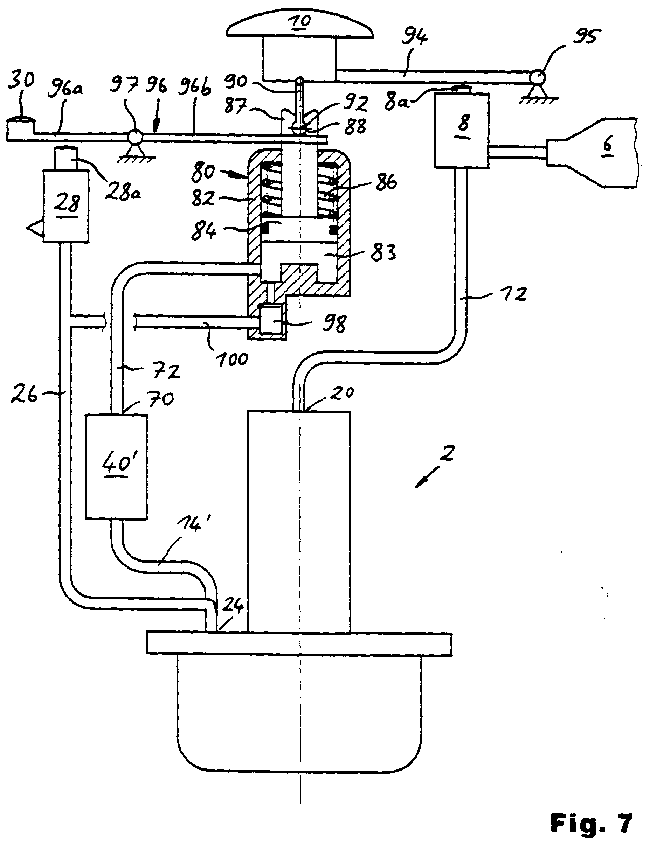

Nachdem sich im Regelventil 40' das Verschlußteil 60 geöffnet hat, tritt das überschüssige CO₂ aus dem Überdruckauslaß 70 des Regelventils 40' aus und strömt in den Zylinder 82 der Kolben/Zylinder-Anordnung 80. Dort baut sich im Innenraum 83 ein entsprechender Druck auf, der dafür sorgt, daß sich der entsprechend mit dem CO₂ beaufschlagte Kolben 84 von seiner in den Figuren 5 und 6 dargestellten Ruhestellung in seine Arbeitsstellung bewegt. Dadurch wird die Kolbenstange 87 ausgefahren und aufgrund des Rasteingriffes mit dieser der Steg 90 und somit der Betätigungsknopf 10 und der erste Schwenkhebel 94 entsprechend mitgenommen. Dies führt zu einer Schwenkbewegung des ersten Schwenkhebels 94 vom Handventil 8 weg, wodurch dessen Betätigungselement 8a vom ersten Schwenkhebel 94 freigegeben wird und aufgrund der federnden Vorspannung in seine Schließstellung zurückkehrt. Da der Druck im Zylinder 82 geringer ist als im Füllkopf 2 und somit auch in der daran angeschlossenen und zum Entlüftungsventil 28 führenden Leitung 26 und in der von dieser abzweigenden Leitung 100, solange sich das CO2 im Zylinder 82 während der Bewegung des Kolbens 84 entspannen kann, ist das Rückschlagventil 98 nun geschlossen. Dieser Betriebszustand ist in Figur 7 gezeigt. Auf diese Weise wird das Handventil 8 automatisch geschlossen.

Bevor die Flasche vom Füllkopf 2 wieder abgenommen werden kann, muß das gesamte System entlüftet werden. Hierzu muß das Entlüftungsventil 28 entsprechend betätigt werden. Dies geschieht durch Drücken des Betätigungsknopfes 30. Dadurch wird der zweite Schwenkhebel 96 so verschwenkt, daß dessen erster Hebelarm 96a in Anlage an das Betätigungselement 28a des Entlüftungsventils 28 gelangt und dieses in seine Öffnungsstellung zum Öffnen des Entlüftungsventils 28 mitnimmt. Diese Schwenkbewegung hat ferner zur Folge, daß der gegenüberliegende zweite Hebelarm 96b des zweiten Schwenkhebels 96 in Anlage an den Steg 90 gelangt und diesen von der Kolbenstange 87 wegbewegt, wodurch das Rastmittel 92 des Steges 90 aus der Rastnut 88 der Kolbenstange 87 gelöst wird. Somit wird gleichzeitig der erste Schwenkhebel 94 in seine (vom Kolben 84 gelöste) Ruhestellung verbracht, wie sie in Figur 5 gezeigt ist.

An dieser Stelle sei angemerkt, daß das Entlüftungsventil 28 über den Betätigungsknopf 30 und den zweiten Schwenkhebel 96 zu jeder Zeit, also in jedem Betriebszustand, geöffnet werden kann, was aus Sicherheitsgründen wichtig ist. Wie die Figuren 5 bis 7 erkennen lassen, ist hierzu die Anordnung derart getroffen, daß ein entsprechendes Verschwenken des zweiten Schwenkhebels 96 durch Drücken des Betätigungsknopfes 30 zum Öffnen des Entlüftungsventils 28 stets aufgrund der zuvor beschriebenen Wirkung des zweiten Hebelarmes 96b eine Schwenkbewegung des ersten Schwenkhebels 94 in seine Ruhestellung und somit ein Schließen des Handventils 8 zur Folge hat. Auf diese Weise wird gewährleistet, daß beim Öffnen des Entlüftungsventils 28 automatisch das Handventil 8 verschlossen wird, um eine weitere Gaszufuhr aus der Gaspatrone 8 zu unterbinden.

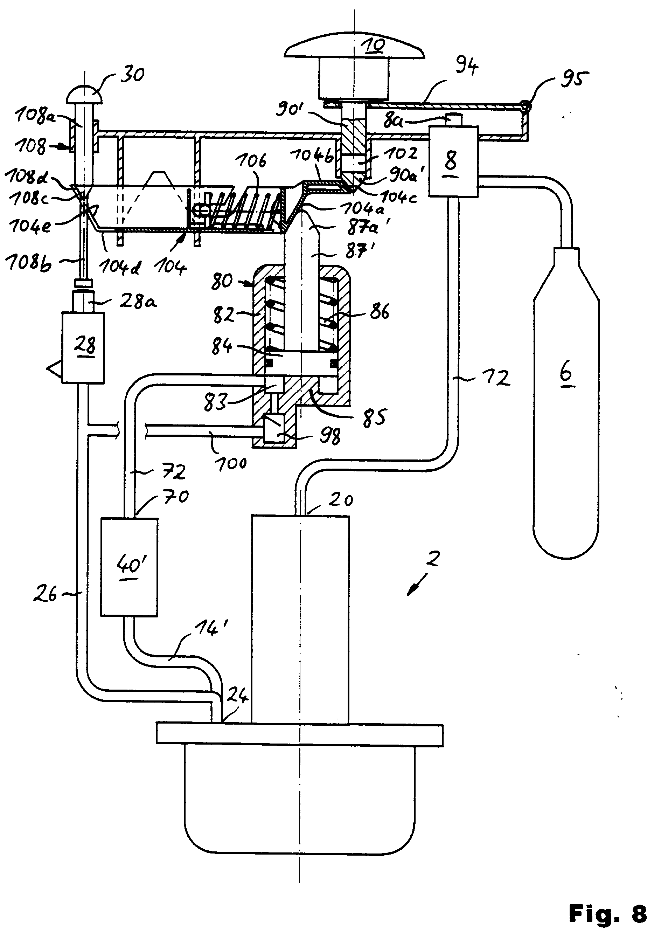

In den Figuren 8 bis 12 ist eine gegenüber der in den Figuren 5 bis 7 gezeigten Anordnung modifizierte Schließautomatik dargestellt. Nachfolgend werden die Unterschiede dieser modifizierten Ausführung im einzelnen erläutert, während auf die Übereinstimmungen nicht näher eingegangen werden soll, wobei für gleiche Teile die gleichen Bezugszeichen verwendet werden.

Wie Figur 8 erkennen läßt, weist bei dieser modifizierten Ausführung die Kolbenstange 87' ein konisch geformtes freies Ende 87a' auf. Auch der an der Unterseite des Verbindungsknopfes 10 angeordnete und nach unten vorstehende Steg 90' weist ein konisch geformtes Ende 90a' auf. Ferner ist der Steg 90' kurz oberhalb seines konischen Endes 90a' mit einer sich quer zu seiner Längsachse erstreckenden Rastöffnung 102 versehen. Wie Figur 8 außerdem erkennen läßt, ist der Steg 90' in Richtung seiner Längsachse bewegbar gelagert, während der erste Schwenkhebel 94 nur lose an der Unterseite des Betätigungsknopfes 10 anliegt. Alternativ ist es aber auch denkbar, den Betätigungsknopf 10 mit dem Steg 90' in ähnlicher Weise wie bei der in den Figuren 5 bis 7 gezeigten Anordnung am ersten Schwenkhebel 94 zu befestigen, wobei dann allerdings die Lagerung des Steges 90' so ausgebildet sein muß, daß der Steg 90' eine durch die Schwenkbewegung des ersten Schwenkhebels 96 ausgelöste leicht gekrümmte Bewegung ausführen kann.

Ferner ist ein Schieber 104 vorgesehen, der im wesentlichen quer zur Bewegungsrichtung des Kolbens 84 und des Steges 90' beweglich gelagert ist, und zwar in beiden Richtungen. An der Unterseite des gemäß Figur 8 rechten Abschnittes weist der Schieber 104 eine sowohl gegenüber der Bewegungsrichtung des Schiebers 104 als auch gegenüber der Bewegungsrichtung 84 und somit der Kolbenstange 87' geneigte erste Steuerfläche 104a auf, die einen Absatz bildet und benachbart zum freien Ende 87a' der Kolbenstange 87' liegt, so daß das Ende 87a' der Kolbenstange 87' in Anlage an die erste Steuerfläche 104a bringbar ist. Hierzu ist die erste Steuerfläche 104 so geneigt, daß sie sich etwa parallel zur in Längsrichtung verlaufenden Kontur des konischen freien Endes 87a' der Kolbenstange 87' erstreckt.

An die den Absatz bildende erste Steuerfläche 104a schließt sich ein erstes (gemäß Figur 8 rechtes) freies Ende 104b an, das mit einer sowohl gegenüber der Bewegungsrichtung des Schiebers 104 als auch gegenüber der Bewegungsrichtung des Steges 90' geneigt verlaufenden zweiten Steuerfläche 104c abschließt. Das erste freie Ende 104b des Schiebers 104 ist benachbart zum Steg 90' derart angeordnet, daß es mit diesem in Anlage bringbar ist, und zwar sowohl mit dessen konischem freien Ende 90a' als auch mit einem übrigen Abschnitt. Hierzu ist die zweite Steuerfläche 104c derart geneigt, daß sie sich etwa parallel zu der in Längsrichtung verlaufenden Kontur des konischen freien Endes 90a' des Steges 90 erstreckt. Außerdem kann das freie Ende 104b des Schiebers 104 in die Rastöffnung 102 eingreifen, welche so dimensioniert ist, daß sie das freie Ende 104b des Schiebers 104 aufnehmen kann. Demnach dient das erste freie Ende 104b des Schiebers 104 als Rastelement zum Einrasten in die Rastöffnung 102 des Steges 90'.

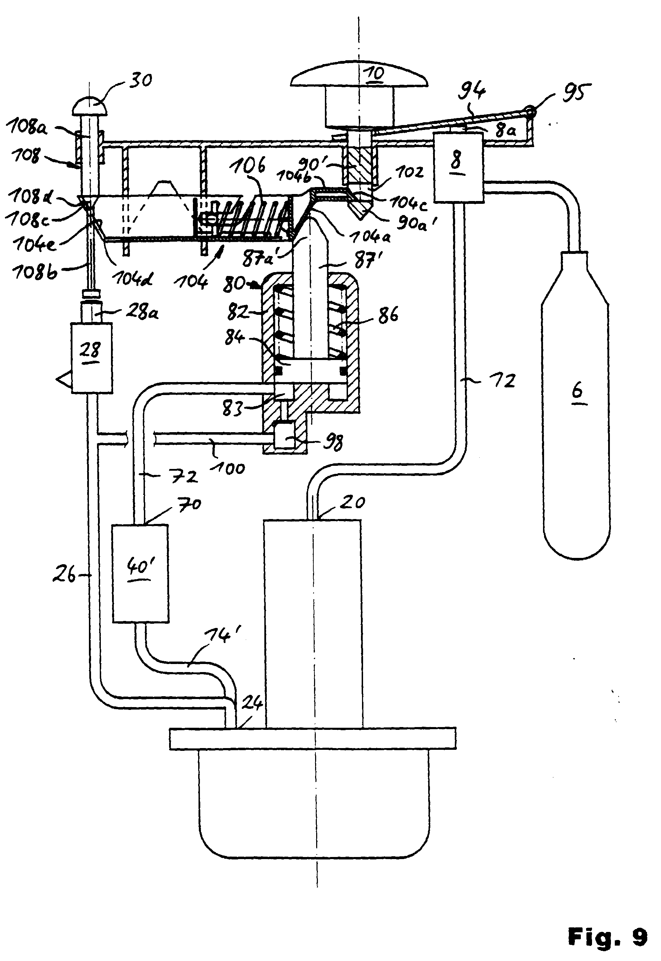

Wie bereits erwähnt, ist der Schieber 104 im wesentlichen quer zu den Bewegungsrichtungen der Kolbenstange 87' und des Steges 90' beweglich gelagert. Dabei ist der Schieber 104 zwischen einer (gemäß den Figuren 8 bis 12 nach rechts gerichteten) ersten Arbeitsstellung und einer (gemäß den Figuren 8 bis 12 nach links gerichteten) zweiten Arbeitsstellung bewegbar. Mit Hilfe einer Feder 106 ist der Schieber 104 in seine erste Arbeitsstellung federnd vorgespannt, in der er in den Figuren 8 und 9 gezeigt ist.

Dabei ist die Anordnung des Schiebers 104 mit seinen ersten und zweiten Steuerflächen 104a und 104c sowie der Kolbenstange 87' und des Steges 90' mit ihren konisch ausgebildeten, spitz zulaufenden freien Enden 87a' und 90a' derart getroffen, daß das freie Ende 87a' der Kolbenstange 87' an der ersten Steuerfläche 104 und das freie Ende 90a' des Steges 90' an der zweiten Steuerfläche 104c anliegt, wenn sich der Kolben 84 in seiner Ruhestellung, der Betätigungsknopf 10 mit dem Steg 90' und dem ersten Schwenkhebel 94 in der Schließstellung und der Schieber 104 durch die von der Feder 106 erzeugte Vorspannung in seiner ersten Arbeitsstellung befindet. Dieser Zustand ist in Figur 8 gezeigt.

Außerdem sind die ersten und zweiten Steuerflächen 104a und 104c hinsichtlich ihrer Neigung am Schieber 104 so angeordnet, daß bei Bewegung des Kolbens 84 von seiner Ruhestellung in seiner Arbeitsstellung und/oder bei Bewegung des Betätigungsknopfes 10 und somit des daran befestigten Steges 90' von der Schließstellung in die Öffnungsstellung der Schieber 104 von seiner ersten Arbeitsstellung gegen die Vorspannung der Feder 104 - gemäß Figur 8 nach links - in seine zweite Arbeitsstellung geschoben wird. Somit haben die freien Enden 87a' und 90a' der Kolbenstange 87' und des Steges 90' die Funktion von Nocken und die ersten und zweiten Steuerflächen 104a und 104c des Schiebers 104 die Funktion von Nockenflächen zur Steuerung der Bewegung des Schiebers 104.

Der Betätigungsknopf 30 für das Entlüftungsventil 28 sitzt bei dieser modifizierten Ausführung auf einem Stift 108, wie Figur 8 erkennen läßt. Der Stift 108 ist in axialer Richtung bewegbar gelagert, wobei seine Bewegungsrichtung in der dargestellten Ausführung im wesentlichen parallel zu der des Kolbens 84 und der Kolbenstange 87' sowie zu der des Betätigungsknopfes 10 und des Steges 90' verläuft. Wie Figur 8 ferner erkennen läßt, weist der Stift 108 einen ersten (gemäß Figur 8 oberen) Abschnitt 108a größeren Durchmessers, auf dem der Betätigungsknopf 30 sitzt, und einen einen zweiten (gemäß Figur 8 unteren) Abschnitt 108b kleineren Durchmessers auf, welcher benachbart zum Betätigungselement 28a des Entlüftungsventils 28 endet und in Anlage an diesen bringbar ist. Zwischen den beiden Abschnitten 108a und 108b ist ein sich konisch verjüngender Verbindungsabschnitt 108c ausgebildet. Dieser Verbindungsabschnitt 108c ist im Bereich eines dem ersten freien Ende 104b gegenüberliegenden zweiten freien Endes 104d des Schiebers 104 angeordnet. Dieses zweite freie Ende 104d des Schiebers 104 ist hohl oder offen und weist im dargestellten Ausführungsbeispiel an seiner Innenseite eine dritte Steuerfläche 104e auf, die gegenüber der Bewegungsrichtung des Schiebers 104 und der Bewegungsrichtung des Stiftes 108 geneigt verläuft.

Der Stift 108 erstreckt sich berührungslos durch das zweite freie Ende 104d des Schiebers 104 und ist zwischen einer Schließstellung, in der sich sein zweiter Abschnitt 108b nicht oder nur lose in Anlage an dem Betätigungselement 28a des Entlüftungsventils 28 befindet und dadurch das Entlüftungsventil 28 geschlossen ist, und einer Öffnungsstellung bewegbar, in der sich der zweite Abschnitt 108b des Stiftes 108 in Anlage an dem Betätigungselement 28a befindet und dabei dieses in seine Öffnungsstellung beaufschlagt, wodurch das Entlüftungsventil 28 geöffnet ist. Hierzu ist die Anordnung des Stiftes 108 und des Schiebers 104 derart getroffen, daß der konische Verbindungsabschnitt 108c des Stiftes 108 mit einer Schräg- bzw. Seitenfläche 108d an der dritten Steuerfläche 104e des Schiebers 104 anliegt, wenn sich der Stift 108 mit dem Betätigungsknopf 30 in seiner Schließstellung und der Schieber 104 in seiner ersten Arbeitsstellung befindet. Dieser Zustand ist ebenfalls in Figur 8 gezeigt. Um eine möglichst flächige Anlage zu erzielen, verläuft die Seitenfläche 108d des konischen Verbindungsabschnittes 108c des Stiftes 108 etwa parallel zur dritten Steuerfläche 104e des Schiebers 104. Ferner sind die dritte Steuerfläche 104e des Schiebers 104 und die Seitenfläche 108d des Verbindungsabschnittes 108c des Stiftes 108 so ausgerichtet und wirken so zusammen, daß die Bewegung des Stiftes 108 von seiner Schließstellung - gemäß Figur 8 nach unten - in seine Öffnungsstellung eine Bewegung des Schiebers 104 von seiner ersten Arbeitsstellung gegen die Vorspannung der Feder 106 in seine zweite Arbeitsstellung zur Folge hat und umgekehrt bei einer Bewegung des Schiebers 104 von seiner zweiten Arbeitsstellung in seine erste Arbeitsstellung der Stift 108 von seiner Öffnungsstellung in seine Schließstellung gebracht wird. Demnach wirkt der konische Verbindungsabschnitt 108c des Stiftes 108 als Nocken und die dritte Steuerfläche 104e des Schiebers 104 als Nockenfläche.

Nachfolgend wird der Betrieb der modifizierten Ausführung anhand der Figuren 8 bis 12 beschrieben, wobei im wesentlichen nur die Unterschiede zu der Anordnung gemäß den Figuren 5 bis 7 im einzelnen erläutert werden.

Figur 8 zeigt die Vorrichtung im drucklosen Zustand vor Einfüllen des CO₂ in den Füllkopf 2 und die daran zu befestigende Flasche. In diesem drucklosen Zustand, der auch als Ruhezustand bezeichnet werden kann, ist der Kolben 84 der Kolben/Zylinder-Anordnung durch die Feder 86 in seine Ruhestellung vorgespannt. Das Handventil 8 ist geschlossen, da dessen Betätigungselement 8a in seine Schließstellung federnd vorgespannt ist. Dadurch befindet sich der erste Schwenkhebel 94 und somit auch der Betätigungsknopf 10 in der Schließstellung. Auch ist das Entlüftungsventil 28 geschlossen, indem dessen Betätigungselement 28a ebenfalls in seine Schließstellung vorgespannt ist. Der Schieber 104 ist durch die Feder 106 in seine erste Arbeitsstellung vorgespannt, in der er mit seiner ersten Steuerfläche 104a am konischen Ende 87a' der Kolbenstange 87' anliegt. In dieser Stellung liegt der Steg 90', an dem der Betätigungsknopf 10 befestigt ist, mit seinem konischen freien Ende 90a' an der zweiten Steuerfläche 104c des Schiebers 104 an bzw. auf, wodurch der Steg 90' mit dem Betätigungsknopf 10 in ihrer Schließstellung gehalten werden. Ferner befindet sich in diesem Zustand auch der Stift 108 mit seinem konischen Verbindungsabschnitt 108c in Anlage an der dritten Steuerfläche 104e des Schiebers 104, wodurch der Stift 108 und somit auch der daran befestigte Betätigungsknopf 30 in der Schließstellung gehalten werden, so daß das Betätigungselement 28a ungehindert in seine Schließstellung vorgespannt und dadurch das Entlüftungsventil 28 geschlossen ist.

Durch Drücken des Betätigungsknopfes 10 wird der erste Schwenkhebel 94 entsprechend verschwenkt, welcher das Betätigungelement 8a des Handventils 8 von dessen Schließstellung in dessen Öffnungsstellung mitnimmt, wodurch das Handventil 8 geöffnet wird. Da sich der durch die Feder 106 in seine erste Arbeitsstellung vorgespannte Schieber 104 mit seinem freien Ende 104b in gleitender Anlage am Steg 90' befindet, wird bei Drücken des Betätigungsknopfes 10 und der dadurch bewirkten Bewegung des Steges 90' von seiner Schließ- in seine Öffnungsstellung der Schieber 104 ein kurzes Stück gegen den Druck der Feder 106 aus seiner ersten Arbeitsstellung - gemäß Figur 8 nach links - herausbewegt, bis er mit seinem freien Ende 104b in die Rastöffnung 102 einrastet, wenn der Betätigungsknopf 10 und somit der daran angesetzte Steg 90' seine Öffnungsstellung erreicht hat. Ist der Schieber 104 mit seinem ersten freien Ende 104b in die Rastöffnung 102 des Steges 90' eingerastet, nimmt er aufgrund der von der Feder 106 erzeugten Vorspannung wieder seine erste Arbeitsstellung ein. Dann befindet sich der Schieber 104 wieder mit seiner ersten Steuerfläche 104a in Anlage an dem freien Ende 87a' der Kolbenstange 87' und mit seiner dritten Steuerfläche 104e in Anlage am Verbindungsabschnitt 108d des Stiftes 108. Dieser Zustand ist in Figur 9 gezeigt.

Dabei ist die Anordnung von Betätigungselement 8a, erstem Schwenkhebel 94 und Rastöffnung 102 derart getroffen, daß bei Drücken des Betätigungsknopfes 10 erst kurz vor oder gleichzeitig mit dem Einrasten des Schiebers 104 mit seinem ersten freien Ende 104b in die Rastöffnung 102 des Steges 90' das Betätigungselement 8a des Handventils 8 die Öffnungsstellung erreicht und somit das Handventil 8 geöffnet wird. Dadurch wird verhindert, daß das Handventil 8 bei Drücken des Betätigungsknopfes 10 zu früh öffnet und die Schließautomatik zu früh ausgelöst werden könnte.

Da sich nach Öffnen des Handventils 8 im gesamten System und somit auch in der Verbindungsleitung 100 Druck aufbaut, schließt das Rückschlagventil 98, wie ebenfalls in Figur 9 erkennbar ist.

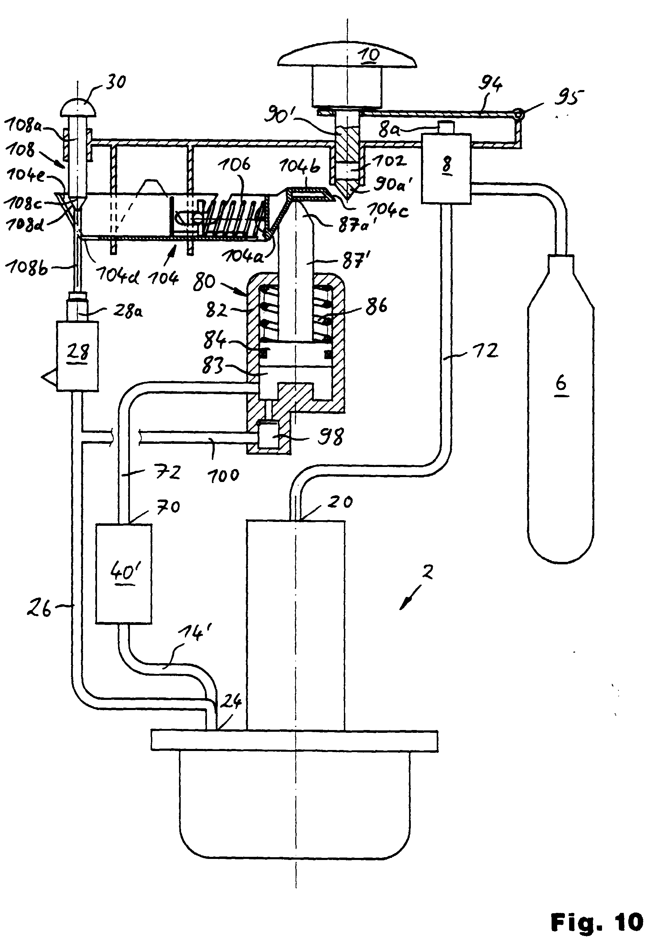

Wenn nun nach Auslösen des Regelventils 40' der Kolben 84 der Kolben/Zylinder-Anordnung 80 aus seiner Ruhestellung in seine - gemäß den Figuren 8 bis 12 obere - Arbeitsstellung bewegt wird, übt das freie Ende 87a' der Kolbenstange 87' einen entsprechenden Druck auf die erste Steuerfläche 104a des Schiebers 104 aus, wodurch der Schieber 104 von seiner ersten Arbeitsstellung gemäß den Figuren 8 und 9 gegen den Druck der Feder 106 in seine zweite Arbeitsstellung verschoben wird. Dadurch löst sich dessen erstes freies Ende 104b aus der Rastöffnung 102 des Steges 90', wodurch die Arretierung zwischen dem Schieber 104 und dem Steg 90' gelöst wird. Somit ist der Steg 90' mit dem Betätigungsknopf 10 und, dadurch bedingt, auch der erste Schwenkhebel 94 und das Betätigungselement 8a des Handventiles 8 frei bewegbar, wodurch das Betätigungselement 8a aufgrund der internen federnden Vorspannung sofort die Öffnungsstellung verläßt und wieder die Schließstellung einnimmt. Dadurch wird das Handventil 8 wieder geschlossen. Da während seiner Bewegung von der Öffnungsstellung in die Schließstellung das Betätigungselement 8a auf den darauf aufliegenden Schwenkhebel 94 einen Druck ausübt, wird dieser mitgenommen und somit entsprechend verschwenkt und nimmt seinerseits den Betätigungsknopf 10 und den daran hängenden Steg 90' wieder in die Schließstellung mit, so daß das freie Ende 90a' des Steges 90' wieder auf der Höhe des ersten freien Endes 104b des Schiebers 104 und somit benachbart zur zweiten Steuerfläche 104c liegt. Ferner ist nun in der zweiten Arbeitsstellung des Schiebers 104 der nach wie vor in der Schließstellung befindliche Stift 108 mit seinem Verbindungsabschnitt 108c von der dritten Steuerfläche 104e gelöst worden. Dieser Zustand ist in Figur 10 gezeigt.

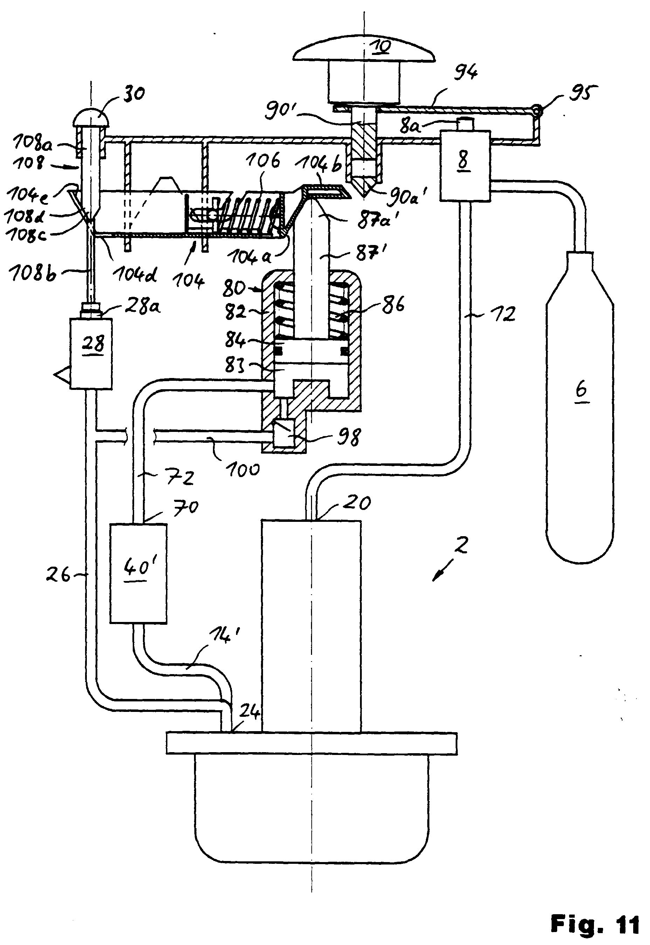

Zum Öffnen des Entlüftungsventils 28 wird der Betätigungsknopf 30 entsprechend gedrückt, wodurch der daran befestigte Stift 108 von seiner - gemäß den Figuren 8 bis 12 oberen - Schließstellung in seine - gemäß den Figuren 8 bis 12 unteren - Öffnungsstellung bewegt wird, wodurch dessen zweiter - gemäß den Figuren 8 bis 12 unterer - Abschnitt 108b in Anlage an das Betätigungselement 28a des Entlüftungsventils 28 gelangt und dieses in die Öffnungsstellung zum Öffnen des Entlüftungsventil 28 mitnimmt. Gleichzeitig gelangt dabei der Verbindungsabschnitt 108c des Stiftes 108 mit seiner Außenfläche 108d wieder in Anlage an die dritte Steuerfläche 104e des Schiebers 104. Dieser Zustand ist in Figur 11 gezeigt.

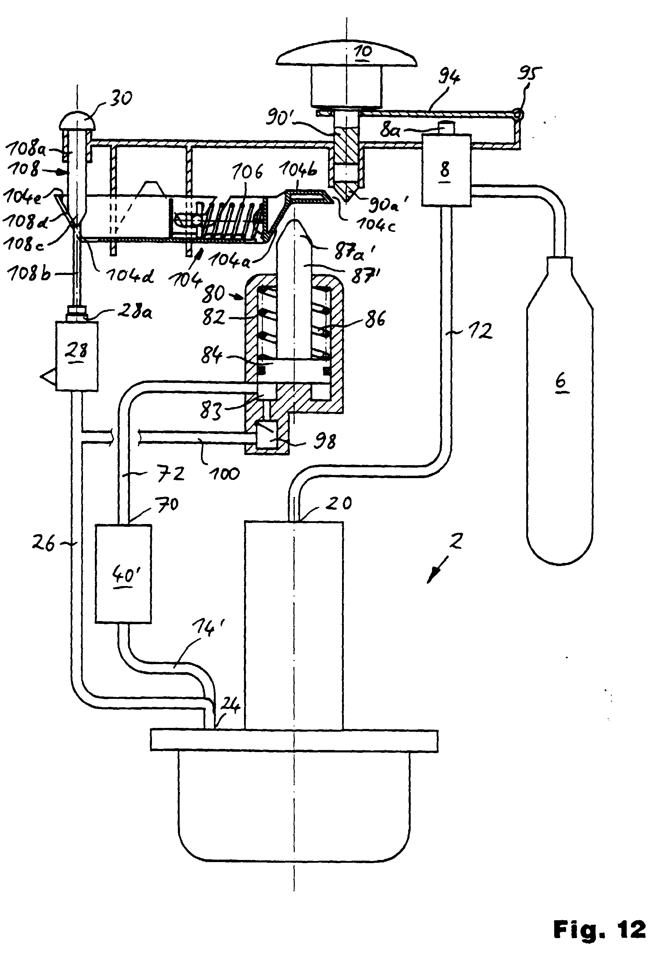

Da die Entlüftung durch das Entlüftungsventil 28 zur Folge hat, daß das gesamte System einschließlich des Innenraumes 83 des Zylinders 82 der Kolben/Zylinder-Anordnung 80 drucklos wird, wird der Kolben 84 durch die Feder 86 von seiner Arbeitsstellung in seine Ruhestellung zurückbewegt. Dadurch löst sich die Kolben-stange 87' mit ihrem freien Ende 87a' von der ersten Steuerfläche 104a des Schiebers 104, so daß der Schieber 104 nur noch durch den in die Öffnungsstellung gedrückten Stift 108 in seiner zweiten Arbeitsstellung gehalten wird. Dieser Zustand ist in Figur 12 gezeigt.

Wird nun der Betätigungsknopf 30 für das Entlüftungsventil 28 losgelassen, kehrt der Schieber 104 aufgrund der Wirkung durch die Vorspannung der Feder 106 von seiner zweiten Arbeitsstellung in seine erste Arbeitsstellung zurück. Dadurch gelangt der Schieber 104 wieder in Anlage an die freien Enden 87a' und 90a' der Kolbenstange 87' und des Steges 90' in der zuvor beschriebenen Weise. Gleichzeitig wird durch das Zusammenspiel der Seitenfläche 108d und der dritten Steuerfläche 104d des Schiebers 104 der Stift 108 in die Schließstellung mitgenommen und dort gehalten. Aufgrund der internen federnden Vorspannung kehrt außerdem das Betätigungselement 28a, welches ja nun nicht mehr vom Stift 108 beaufschlagt wird, von seiner Öffnungsstellung in seine Schließstellung zurück, wodurch das Entlüftungsventil 28 geschlossen wird. Nun nimmt die Vorrichtung wieder ihren Ausgangszustand gemäß Figur 8 ein, so daß sie zum Befüllen einer neuen Flasche bereit ist.

An dieser Stelle sei noch darauf hingewiesen, daß das Entlüftungsventil 28 in jedem Betriebszustand geöffnet werden kann und aufgrund der zuvor beschriebenen Anordnung die durch das Drücken des Betätigungsknopfes 30 ausgelöste Bewegung des Stiftes 108 aufgrund der Zusammenwirkung des konischen Verbindungsabschnittes 108c mit der dritten Steuerfläche 104e des Schiebers 104 stets eine Bewegung des Schiebers 104 von seiner ersten Arbeitsstellung in seine zweite Arbeitsstellung zwangsläufig zur Folge hat, wodurch eine Arretierung des Schiebers 104 mit dem Steg 90' nicht möglich ist, da sich in der zweiten Arbeitsstellung des Schiebers 104 dessen erstes freies Ende 104b außerhalb des Stiftes 90' befindet.

Abschließend sei noch angemerkt, daß die in den Figuren 5 bis 7 sowie 8 bis 12 dargestellte Schließautomatik grundsätzlich auch in der anhand der Figuren 1 und 2 beschriebenen ersten Ausführung Anwendung finden kann.

## Patentansprüche

1. Vorrichtung zum Anreichern von Flüssigkeiten, insbesondere Getränken, die in Flüssigkeitsbehältern (4), insbesondere Flaschen, abgefüllt sind, mit Gasen, insbesondere CO₂, mit ersten Anschlußmitteln (12) für eine Gasquelle (6), insbesondere für mindestens eine das Gas enthaltende Gaspatrone, mindestens einem an die ersten Anschlußmittel (12) anschließbaren Gaseinfüllelement (2) zum Einfüllen des Gases in die in einem Flüssigkeitsbehälter (4) befindliche Flüssigkeit und einer Regeleinrichtung (40; 40'), die den sich beim Einfüllen des Gases aufbauenden Druck im Flüssigkeitsbehälter (4) auf einen Sollwert begrenzt,
dadurch gekennzeichnet, daß die Regeleinrichtung (40; 40') Mittel (60, 64) zur Feststellung des Druckes des Gases und Einstellmittel (54, 72) zur manuellen Einstellung des Sollwertes aufweist.

2. Vorrichtung nach Anspruch 1,
dadurch gekennzeichnet, daß die Regeleinrichtung (40; 40') eine Regelventileinrichtung ist und einen Einlaß (44, 48a) für das Gas und einen Überdruckauslaß (70) aufweist, der sich öffnet und das Gas entweichen läßt, wenn der Druck im Flüssigkeitsbehälter (4) den Sollwert erreicht.

3. Vorrichtung nach Anspruch 2,
dadurch gekennzeichnet, daß die Regelventileinrichtung (40; 40') einen vom Einlaß (44, 48a) zum Überdruckauslaß (70) führenden ersten Kanal (52) und ein Verschlußteil (60) aufweist, das zwischen einer Schließstellung, in der es den ersten Kanal (52) verschließt, und einer Öffnungsstellung, in der es den ersten Kanal (52) öffnet, bewegbar gelagert und in die Schließstellung federnd (64) vorgespannt ist, wobei die Vorspannung dem Sollwert entspricht.

4. Vorrichtung nach Anspruch 3,
dadurch gekennzeichnet, daß die Regelventileinrichtung (40; 40') eine Feder (64) aufweist, die sich mit ihrem einen Ende am Verschlußteil (60) abstützt und mit ihrem anderen Ende in mechanischer Verbindung mit den Einstellmitteln (54, 72) befindet.

5. Vorrichtung nach Anspruch 4,
dadurch gekennzeichnet, daß die Einstellmittel (54, 72) ein Einstellelement (72) aufweisen, das in seiner Lage veränderbar ist, so daß die effektive Länge der Feder (64) zwischen ihren Enden einstellbar ist.

6. Vorrichtung nach Anspruch 5,
dadurch gekennzeichet, daß das Einstellelement als beweglich gelagerter Schieber ausgebildet ist.

7. Vorrichtung nach Anspruch 5,
dadurch gekennzeichnet, daß das Einstellelement (72) als drehbar gelagerter Rotationskörper ausgebildet ist, dessen Umfang (73) sich in mechanischer Verbindung mit dem anderen Ende der Feder (64) befindet.

8. Vorrichtung nach Anspruch 7,
dadurch gekennzeichnet, daß sich das Einstellelement (72) mit seinem Umfang (73) in Gleiteingriff mit dem anderen Ende der Feder (64) oder einem dazwischen angeordneten Verbindungsstück (54) befindet.

9. Vorrichtung nach Anspruch 7 oder 8,
dadurch gekennzeichnet, daß das Einstellelement (72) exzentrisch gelagert ist.

10. Vorrichtung nach Anspruch 9,
dadurch gekennzeichnet, daß das Einstellelement (72) kreisförmig ausgebildet ist.

11. Vorrichtung nach mindestens einem der Ansprüche 5 bis 10,
dadurch gekennzeichnet, daß die Regelventileinrichtung (40; 40') einen ersten Körper (42), in dem der erste Kanal (52) und ein zylindrischer Hohlraum (50), in den der erste Kanal (52) mündet, ausgebildet sind, und einen zweiten Körper (54) aufweist, der einen zylindrischen Abschnitt (54a), mit dem er abgedichtet im, zylindrischen Hohlraum (50) des ersten Körpers (42; 42') bewegbar geführt ist, eine im zylindrischen Abschnitt (50) ausgebildete und das Verschlußteil (60) aufnehmende Bohrung (58) und einen zum Überdruckauslaß (70) führenden zweiten Kanal (68) aufweist und sich in Eingriff mit dem Einstellelement (72) befindet.

12. Vorrichtung nach den Ansprüchen 7 und 11,
dadurch gekennzeichnet, daß sich der zweite Körper (54) in Gleiteingriff mit dem Umfang des Einstellelementes (72) befindet.

13. Vorrichtung nach Anspruch 4 sowie Anspruch 11 oder 12,
dadurch gekennzeichnet, daß in der Bohrung (58) des zylindrischen Abschnittes (54a) des zweiten Körpers (54) ein Absatz (66) ausgebildet ist, an der sich die Feder (64) mit ihrem anderen Ende abstützt.

14. Vorrichtung nach mindestens einem der Ansprüche 2 bis 13,
gekennzeichnet durch zweite Anschlußmittel (13, 18), die den Einlaß (44, 48a) der Regelventileinrichtung (40') mit dem Flüssigkeitsbehälter (4) verbinden.

15. Vorrichtung nach mindestens einem der Ansprüche 2 bis 14,
dadurch gekennzeichnet, daß die Regelventileinrichtung (40) zusätzlich einen Auslaß (46, 48b) aufweist und mit ihrem Einlaß (44, 48a) und ihrem Auslaß (46, 48b) in die ersten Anschlußmittel (12) geschaltet ist.

16. Vorrichtung nach den Ansprüchen 3 und 15,
dadurch gekennzeichnet, daß die Regelventileinrichtung (40) einen dritten Kanal (48a, 48b) aufweist, durch den das Gas von der Gasquelle (6) zum Gaseinfüllelement (2) geleitet wird und von dem der erste Kanal (52) abzweigt.

17. Vorrichtung nach den Ansprüchen 11 und 16,
dadurch gekennzeichnet, daß der dritte Kanal (48a, 48b) ebenfalls im ersten Körper (42) ausgebildet ist.

18. Vorrichtung nach mindestens einem der Ansprüche 1 bis 17,
dadurch gekennzeichnet, daß die Regeleinrichtung (40') das Schließen der ersten Anschlußmittel bewirkt, wenn der Druck im Flüssigkeitsbehälter den Sollwert erreicht.

19. Vorrichtung nach den Ansprüchen 2 und 18,
gekennzeichnet durch eine Schließeinrichtung (80, 94), die vom Überdruckauslaß (70) der Regelventileinrichtung (40; 40') angetrieben wird und die ersten Anschlußmittel (12) verschließt.

20. Vorrichtung nach Anspruch 19,
bei welcher in die ersten Anschlußmittel (12) eine Anschlußventileinrichtung (8) geschaltet ist, die ein Betätigungselement (8a) aufweist, welches zwischen einer Schließstellung, in der die Anschlußventileinrichtung (8) geschlossen ist, und einer Öffnungsstellung, in der die Anschlußventileinrichtung (8) geöffnet ist, bewegbar ist,
dadurch gekennzeichnet, daß das Betätigungselement (8a) mit der Schließeinrichtung (80, 94) koppelbar ist.

21. Vorrichtung nach Anspruch 20,
dadurch gekennzeichnet, daß das Betätigungselement (8a) der Anschlußventileinrichtung (8) in seine Schließstellung federnd vorgespannt ist.

22. Vorrichtung nach Anspruch 20 oder 21,
dadurch gekennzeichnet, daß die Schließeinrichtung eine Kolben/Zylinder-Anordnung (80) aufweist, deren Zylinder (82) an den Überdruckauslaß (70) angeschlossen und deren zwischen einer Ruhestellung und einer Arbeitsstellung beweglicher Kolben (84) mit dem Betätigungselement (8a) der Anschlußventileinrichtung (8) derart koppelbar ist, daß bei Beaufschlagung des Kolbens (84) mit Gas aus dem Überdruckauslaß (70) das Betätigungselement (8a) in seine Schließstellung bewegt wird.

23. Vorrichtung nach Anspruch 22,
dadurch gekennzeichnet, daß der Kolben (84) in seine Ruhestellung, in der das effektive Volumen (83) des Zylinders (82) am kleinsten ist, federnd (86) vorgespannt ist.

24. Vorrichtung nach Anspruch 22 oder 23,
gekennzeichnet durch eine erste Kopplungseinrichtung (90, 92, 94; 92', 94), durch die der Kolben (84) der Schließeinrichtung mit dem Betätigungselement (8a) der Anschlußventileinrichtung (8) koppelbar ist.

25. Vorrichtung nach Anspruch 24,
dadurch gekennzeichnet, daß die erste Kopplungseinrichtung mit einem Betätigungsknopf (10) versehen ist.

26. Vorrichtung nach Anspruch 24 oder 25,
dadurch gekennzeichnet, daß die erste Kopplungseinrichtung einen ersten Schwenkhebel (94) aufweist, der in Anlage an das Betätigungselement (8a) der Anschlußventileinrichtung (8) bringbar ist.

27. Vorrichtung nach mindestens einem der Ansprüche 24 bis 26,
dadurch gekennzeichnet, daß die erste Kopplungseinrichtung (90, 92, 94) mit dem Kolben (84) der Schließeinrichtung in lösbaren Eingriff bringbar und dadurch das Betätigungselement (8a) der Anschlußventileinrichtung (8) in seine Öffnungsstellung bewegbar ist, wenn sich der Kolben (84) in seiner Ruhestellung befindet.

28. Vorrichtung nach mindestens einem der Ansprüche 22 bis 26,
dadurch gekennzeichnet, daß ein Arretierungselement (104b) vorgesehen ist, das eine Arretierung des Betätigungselementes (8a) der Anschlußventileinrichtung (8) in seiner Öffnungsstellung bewirkt, und der Kolben der Schließeinrichtung mit dem Arretierungselement (104b) derart in Eingriff bringbar ist, daß die Arretierung des Betätigungselementes (8a) durch Bewegung des Kolbens (84) in seine Arbeitsstellung gelöst wird.

29. Vorrichtung nach den Ansprüchen 24 und 28,
dadurch gekennzeichnet, daß das Arretierungselement (104b) mit der ersten Kopplungseinrichtung (92', 94) in lösbaren Eingriff bringbar ist, wenn sich die erste Kopplungseinrichtung in einem Betriebszustand befindet, in dem das Betätigungselement (8a) der Anschlußventileinrichtung (8) seine Öffnungsstellung einnimmt, und der Kolben (84) der Schließeinrichtung mit dem Arretierungselement (104b) derart in Eingriff bringbar ist, daß bei Bewegung des Kolbens (84) in seine Arbeitsstellung der Eingriff des Arretierungselementes (104b) mit der ersten Kopplungseinrichtung (92', 94) gelöst wird.

30. Vorrichtung nach Anspruch 29,
dadurch gekennzeichnet, daß das Arretierungselement (104b) zwischen einer Ruhestellung und einer Arretierungsstellung bewegbar ist und die erste Kopplungseinrichtung (92', 94) in einen die Anschlußventileinrichtung (8) schließenden ersten und in einen die Anschlußventileinrichtung (8) öffnenden zweiten Betriebszustand bringbar ist und ein Rastmittel (102) aufweist, in das das Arretierungselement (104b) in seiner Arretierungsstellung eingreift, wenn sich die erste Kopplungseinrichtung in ihrem zweiten Betriebszustand befindet.

31. Vorrichtung nach Anspruch 30,
dadurch gekennzeichnet, daß das Arretierungselement (104b) in seine Arretierungsstellung (106) federnd vorgespannt ist.

32. Vorrichtung nach Anspruch 30 oder 31,
dadurch gekennzeichnet, daß am Arretierungselement (104b) eine geneigt zu seiner Bewegungsrichtung verlaufende Nockenfläche (104a) derart ausgebildet ist, daß der Kolben (84) bei seiner Bewegung in die Arbeitsstellung mit einem Abschnitt (87a') in Anlage an die Nockenfläche (104a) gelangt und dadurch das Arretierungselement (104b) in seine Ruhestellung bewegt.

33. Vorrichtung nach mindestens einem der Ansprüche 19 bis 32,
bei welcher an das Gaseinfüllelement (2) ein Entlüftungsventil (28) angeschlossen ist, das eine vom Benutzer der Vorrichtung manuell zu bedienendes Betätigungselement (28a) aufweist, welches zwischen einer Schließstellung, in der das Entlüftungsventil (28) geschlossen ist, und einer Öffnungsstellung, in der das Entlüftungsventil (28) geöffnet ist, bewegbar ist, gekennzeichnet durch eine zweite Kopplungseinrichtung (96; 104), die mit dem Betätigungselement (28a) des Entlüftungsventils (28) einerseits und der Schließeinrichtung (80, 94) andererseits derart koppelbar ist, daß bei Bewegung des Betätigungselementes (28a) des Entlüftungsventils (28) in seine Öffnungsstellung die Schließeinrichtung die ersten Anschlußmittel (12) verschließt.

34. Vorrichtung nach Anspruch 33,
dadurch gekennzeichnet, daß die zweite Kopplungseinrichtung (96) in einen ersten und einen zweiten Betriebszustand, insbesondere in eine erste und eine zweite Arbeitsstellung, bringbar ist, im ersten Betriebszustand der zweiten Kopplungseinrichtung (96) das Betätigungselement (28a) des Entlüftungsventils (28) in seiner Schließstellung verbleibt und im zweiten Betriebszustand der zweiten Kopplungseinrichtung (96) das Betätigungselement (28a) des Entlüftungsventils (28) in seine Öffnungsstellung gebracht ist.

35. Vorrichtung nach den Ansprüchen 27 und 34,
dadurch gekennzeichnet, daß die zweite Kopplungseinrichtung (96) mit der ersten Kopplungseinrichtung (90, 92, 94) derart koppelbar ist, daß die erste Kopplungseinrichtung im ersten Betriebszustand der zweiten Kopplungseinrichtung (96) in Eingriff mit dem Kolben (84) der Schließeinrichtung bringbar ist und sich im zweiten Betriebszustand der zweiten Kopplungseinrichtung (96) außer Eingriff vom Kolben (84) befindet.

36. Vorrichtung nach Anspruch 34 oder 35,
dadurch gekennzeichnet, daß die zweite Kopplungseinrichtung (96) als zweiter Schwenkhebel ausgebildet ist.

37. Vorrichtung nach den Ansprüchen 28 und 33,
dadurch gekennzeichnet, daß die zweite Kopplungseinrichtung (104) in einen ersten und einen zweiten Betriebszustand, vorzugsweise in eine erste und eine zweite Arbeitsstellung, bringbar und mit dem Arretierungselement (104b) derart gekoppelt ist, daß im ersten Betriebszustand der zweiten Kopplungseinrichtung (104) das Betätigungelement (28a) des Entlüftungsventils (28) in seiner Schließstellung verbleibt und bei Bewegung des Betätigungselementes (28a) des Entlüftungsventils (28) in seine Öffnungsstellung die zweite Kopplungseinrichtung (104) in den zweiten Betriebszustand gebracht wird und dabei eine Arretierung des Betätigungselementes (8a) der Anschlußventileinrichtung (8) durch das Arretierungselement (104b) verhindert.

38. Vorrichtung nach Anspruch 37,
dadurch gekennzeichnet, daß das Arretierungselement (104b) Teil der zweiten Kopplungseinrichtung (104) ist.

39. Vorrichtung nach den Ansprüchen 30 und 38,
dadurch gekennzeichnet, daß die zweite Kopplungseinrichtung (104) zwischen zwei Arbeitsstellungen bewegbar gelagert ist, wobei ihre erste Arbeitsstellung mit der Arretierungsstellung des Arretierungelementes (104b) und ihre zweite Arbeitsstellung mit der Ruhestellung des Arretierungselementes (104b) übereinstimmt.

40. Vorrichtung nach mindestens einem der Ansprüche 33 bis 39,
bei welcher das Gaseinfüllelement (2) in einem Gehäuse sitzt, das mit einer Tür verschließbar ist, dadurch gekennzeichnet, daß das Betätigungselement (28a) des Entlüftungsventils (28) mit der Tür gekoppelt ist und bei Betätigung diese öffnet.

41. Vorrichtung nach Anspruch 22 sowie nach mindestens einem der Ansprüche 33 bis 40,
dadurch gekennzeichnet, daß der Zylinder (82) der Schließeinrichtung über eine Verbindungsleitung (100) an dem Eingang des Entlüftungsventils (28) anschließbar ist.

42. Vorrichtung nach Anspruch 41,
gekennzeichnet durch ein Rückschlagventil (98), das bei einem Druckgefälle von der Verbindungsleitung (100) in den Zylinder (82) schließt.
